# EUROPEAN PATENT APPLICATION

(11) **EP 4 707 248 A1**
(43) Date of publication of application: **11.03.2026**
(21) Application number: 24836148.7
(22) Date of filing: 01.04.2024
(51) Int. Cl.: C02F 1/469, C02F 1/00, C02F 5/08, C02F 1/461

(54) **WATER TREATMENT APPARATUS AND METHOD FOR CONTROLLING SAME**

(30) Priority: 03.07.2023 KR 20230086109; 15.09.2023 KR 20230123496; 12.10.2023 KR 20230136041
(71) Applicant: Samsung Electronics Co., Ltd., Suwon-si, Gyeonggi-do 16677 (KR)
(72) Inventor: LIM, Changbae, Suwon-si Gyeonggi-do 16677 (KR); KIM, Sungwon, Suwon-si Gyeonggi-do 16677 (KR); PARK, Heejin, Suwon-si Gyeonggi-do 16677 (KR); HONG, Sungpil, Suwon-si Gyeonggi-do 16677 (KR); KIM, Yumee, Suwon-si Gyeonggi-do 16677 (KR)
(74) Representative: Gulde & Partner
(86) International application number: PCT/KR2024/004155
(87) International publication number: WO 2025/009697

(57) **Abstract**

Provided is a water treatment apparatus, including a first channel including a first current collector and an anion exchange membrane, a second channel including a second current collector and a cation exchange membrane, a third channel including the anion exchange membrane and the cation exchange membrane, and at least one processor configured to during a deionization operation, apply a negative voltage to the second current collector to move cations contained in water in the third channel to the second channel, during a regeneration operation, apply a first positive voltage to the second current collector to move cations in the second channel to the third channel, and during a descaling operation, apply a second positive voltage greater than the first positive voltage to the second current collector to electrolyze water in the second channel.

## Description

### [TECHNICAL FIELD]

Embodiments of the present disclosure relate to a water treatment apparatus using a capacitive deionization technology, and a method for controlling the same.

### [BACKGROUND ART]

Deionization is a technology widely used across industries to remove hardness components such as calcium and magnesium from water with high hardness levels, for use as drinking water or boiler water, or as cooling water in power plants and factories.

Capacitive deionization (CDI) is an example of a deionization technology that removes ions by electrochemical adsorption on high specific surface area electrodes.

CDI modules perform water treatment by migrating and removing ions from an inside of a channel by an electric field generated perpendicular to a direction of fluid flow.

In a case where the CDI module performs water treatment for a long time, scale may accumulate on the electrodes, reducing the efficiency of the water treatment.

### [DISCLOSURE]

### [TECHNICAL SOLUTION]

One or more embodiments provide a water treatment apparatus may generate acidic water on its own to remove scale on electrodes.

One or more embodiments provide a water treatment apparatus may remove scale on electrodes only in a case where descaling is required.

According to an aspect of the disclosure, acidic water generated by a water treatment apparatus itself may be prevented from leaking into a deionized water flow path.

According to an aspect of an embodiment, there is provided a water treatment apparatus, including a first channel including a first current collector and an anion exchange membrane, a second channel including a second current collector and a cation exchange membrane, a third channel including the anion exchange membrane and the cation exchange membrane, and at least one processor configured to during a deionization operation, apply a negative voltage to the second current collector to move cations contained in water in the third channel to the second channel, during a regeneration operation, apply a first positive voltage to the second current collector to move cations in the second channel to the third channel, and during a descaling operation, apply a second positive voltage greater than the first positive voltage to the second current collector to electrolyze water in the second channel.

According to another aspect of an embodiment, there is provided a method for controlling a water treatment apparatus including a first channel that includes a first current collector and an anion exchange membrane, a second channel that includes a second current collector and a cation exchange membrane, and a third channel that includes the anion exchange membrane and the cation exchange membrane, the method including, during a deionization operation, applying a negative voltage to the second current collector to move cations contained in water in the third channel to the second channel, during a regeneration operation, applying a first positive voltage to the second current collector to move cations in the second channel to the third channel, and during a descaling operation, applying a second positive voltage greater than the first positive voltage to the second current collector to electrolyze water in the second channel..

### [DESCRIPTION OF DRAWINGS]

FIG. 1 is a conceptual diagram illustrating an example of a water treatment apparatus according to an embodiment;
FIG. 2 is a control block diagram of a water treatment apparatus according to an embodiment;
FIG. 3 is a flowchart illustrating an example of a method for controlling a water treatment apparatus according to an embodiment;
FIG. 4 is a conceptual diagram illustrating a movement of ions that occurs during a deionization operation of a water treatment apparatus according to an embodiment;
FIG. 5 is a conceptual diagram illustrating a movement of ions that occurs during a regeneration operation of a water treatment apparatus according to an embodiment;
FIG. 6 is a conceptual diagram illustrating a chemical reaction that occurs during a descaling operation of a water treatment apparatus according to an embodiment;
FIG. 7 is a diagram for relatively comparing between a size of a gap between a first electrode and an anion exchange membrane and a size of a gap between a second electrode and a cation exchange membrane in a water treatment apparatus according to an embodiment;
FIG. 8 illustrates an example in which a spacer is installed between a second electrode and a cation exchange membrane in a water treatment apparatus according to an embodiment;
FIG. 9 is a flowchart illustrating an example of a method for controlling a water treatment apparatus according to an embodiment;
FIG. 10 is a conceptual diagram illustrating time periods of a deionization operation, a regeneration operation, and a descaling operation performed by a water treatment apparatus according to an embodiment;
FIG. 11 is a flowchart illustrating an example of a method for controlling a water treatment apparatus according to an embodiment;
FIG. 12 illustrates an example of water flow in a deionization operation of a water treatment apparatus according to an embodiment;
FIG. 13 illustrates an example of water flow in a regeneration operation of a water treatment apparatus according to an embodiment;
FIG. 14 illustrates an example of water flow in a descaling operation of a water treatment apparatus according to an embodiment;
FIG. 15 is a conceptual diagram illustrating another example of a water treatment apparatus according to an embodiment;
FIG. 16 is a flowchart illustrating an example of a method for controlling the water treatment apparatus shown in FIG. 15 according to an embodiment;
FIG. 17 illustrates an example of water flow in a deionization operation of the water treatment apparatus shown in FIG. 15 according to an embodiment;
FIG. 18 illustrates an example of water flow in a regeneration operation of the water treatment apparatus shown in FIG. 15 according to an embodiment;
FIG. 19 illustrates an example of water flow in a descaling operation of the water treatment apparatus shown in FIG. 15 according to an embodiment;
FIG. 20 illustrates a washing machine connected to a water treatment apparatus according to an embodiment;
FIG. 21 is a cross-sectional view of a washing machine to which a water treatment apparatus according to an embodiment;
FIG. 22 illustrates a refrigerator connected to a water treatment apparatus according to an embodiment;
FIG. 23 illustrates a state where a door of a refrigerator connected to a water treatment apparatus is open according to an embodiment;
FIG. 24 is a cross-sectional view of a refrigerator to which a water treatment apparatus is applied according to an embodiment;
FIG. 25 illustrates a dishwasher connected to a water treatment apparatus according to an embodiment;
FIG. 26 is a cross-sectional view of a dishwasher to which a water treatment apparatus is applied according to an embodiment; and
FIG. 27 illustrates a water purifier to which a water treatment apparatus is applied according to an embodiment.

### [MODES OF THE DISCLOSURE]

Various embodiments of the present disclosure and terms used therein are not intended to limit the technical features described in the present disclosure to particular embodiments, and it should be construed as including various modifications, equivalents, or alternatives of a corresponding embodiment.

With regard to description of drawings, similar reference numerals may be used for similar or related components.

A singular form of a noun corresponding to an item may include one item or a plurality of the items unless context clearly indicates otherwise.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

The term "and/or" includes any and all combinations of one or more of a plurality of associated listed items.

It will be understood that the terms "first", "second", etc., may be used only to distinguish one component from other components, not intended to limit the corresponding component in other aspects (e.g., importance or order).

It is said that one (e.g., first) component is "coupled" or "connected" to another (e.g., second) component, with or without the terms "functionally" or "communicatively". When referenced, it means that one component can be connected to the another component directly (e.g., by wire), wirelessly, or through a third component.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

An expression that one component is "connected", "coupled", "supported", or "in contact" with another component includes a case in which the components are directly "connected", "coupled", "supported", or "in contact" with each other and a case in which the components are indirectly "connected", "coupled", "supported", or "in contact" with each other through a third component.

It will also be understood that when one component is referred to as being "on" or "over" another component, it can be directly on the other component or intervening components may also be present.

A water treatment apparatus according to various embodiments may purify contaminated water to a clean state. The water treatment apparatus is used in wastewater treatment facilities, industrial processes, and water supply systems used in homes and offices, playing an important role in environmental protection and human health. Clean water purified by the water treatment apparatus may be returned to nature or used for cleaning purposes, used as drinking water, or reused in industrial processes or the like.

According to various embodiments, the water treatment apparatus may include not only household water treatment apparatuses such as a water purifier or a water softener but also industrial water treatment apparatuses.

The water treatment apparatus may purify contaminated water using a variety of methods, including biological, chemical, and physical treatment methods.

The water treatment apparatus according to an embodiment may purify contaminated water via a capacitive deionization (CDI) method.

The CDI method refers to a method of removing ions from contaminated water using a principle that ions are adsorbed to and desorbed from the surfaces of electrodes by an electrical force generated between the electrodes. Throughout the specification, removing ions from contaminated water may include removing ionic substances of contaminated water.

The water treatment apparatus may include various components such as a plurality of pipes in which water flows, a plurality of values for controlling the flow of water, and a CDI module for purifying water by a CDI method.

The CDI module may include a housing, and electrodes and ion-exchange membranes provided in the housing. By applying a voltage to the electrodes, ions contained in water flowing into the housing may be adsorbed to the electrodes or desorbed from the electrodes.

According to various embodiments, the water treatment apparatus may further include various components such as a pre-treatment filter for pre-treatment of raw water to be supplied to the CDI module and/or a post-treatment filter for treatment of water purified by the CDI module again.

The CDI module may be replaced with terms such as an ion removal module, in that the module removes ions.

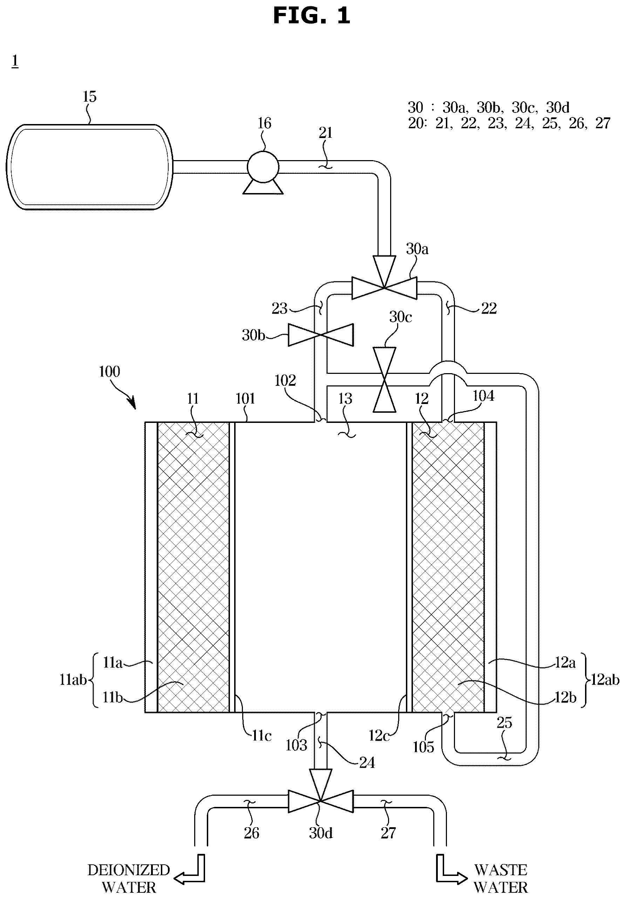

FIG. 1 is a conceptual diagram illustrating an example of a water treatment apparatus according to an embodiment.

Referring to FIG. 1, a water treatment apparatus 1 according to an embodiment may include a capacitive deionization (CDI) module 100, at least one flow path 20 formed by pipes, and at least one valve 30 adjusting water flow in the at least one flow path 20.

The CDI module 100 may include electrodes 11ab and 12ab and ion exchange membranes 11c and 12c.

The first electrode 11ab and the second electrode 12ab may be disposed opposite to each other, and the first electrode 11ab and the second electrode 12ab disposed opposite to each other may form a capacitor.

The first electrode 11ab may include a first current collector 11a and a first porous electrode 11b.

As will be described below, the first electrode 11ab may be a positive electrode (anode) during a deionization operation of the water treatment apparatus 1, and may be a negative electrode (cathode) during a regeneration operation or descaling operation of the water treatment apparatus 1.

In an embodiment, the first current collector 11a may include a pole plate electrically connected to the first porous electrode 11b. The pole plate may include a metallic plate and/or a non-metallic plate.

A material of the first current collector 11a may be a conductor. For example, the material of the first current collector 11a may be graphite, without being limited thereto.

The first porous electrode 11b may include a solid electrode including an empty space (or a void space). The first porous electrode 11b may be made of a material that is susceptible to adsorbing ions. For example, the first porous electrode 11b may be a carbon porous electrode, but the type of the first porous electrode 11b is not limited thereto.

The second electrode 12ab may include a second current collector 12a and a second porous electrode 12b.

As will be described below, the second electrode 12ab may be a negative electrode (cathode) during the deionization operation of the water treatment apparatus 1, and may be a positive electrode (anode) during the regeneration operation or descaling operation of the water treatment apparatus 1.

In an embodiment, the second current collector 12a may include a pole plate electrically connected to the second porous electrode 12b. The pole plate may include a metallic plate and/or a non-metallic plate.

A material of the second current collector 12a may be a conductor.

As will be described below, in the descaling operation of the water treatment apparatus 1, acidic water may be generated by electrolyzing water at the second electrode 12ab. In order to electrolyze water at the second electrode 12ab, a relatively large voltage is required to be applied to the second electrode 12ab, which may result in a relatively large consumption of electrical energy in the descaling operation.

In an embodiment, the second current collector 12a may be made of a material desirable as a catalyst for the electrolysis of water. The second current collector 12a may be formed of a material that may allow an aqueous solution of 1000 ppm of NaCl to reach less than or equal to pH 4 at a current density of 25 mA/cm2 within less than or equal to 7 minutes.

For example, a material of the second current collector 12a may be selected from the group consisting of a transition metal, transition metal oxide, transition metal alloy, aluminum, aluminum oxide, aluminum alloy, graphene, dimensionally stable anode (DSA), and boron doped diamond (BDD) electrode.

The transition metal may include, for example, platinum (Pt), ruthenium (Ru), iridium (Ir), rhodium (Rh), nickel (Ni), iron (Fe), cobalt (Co), copper (Cu), and the like. The transition metal alloy may include, for example, Ni-containing materials such as nickel cobalt (NiCo), nickel/boride (Ni/B), and the like.

In an embodiment, the transition metal alloy may include an alloy of transition metal oxides.

The DSA may include a titanium (Ti) material coated with a metal oxide. The DSA may include, for example, ruthenium oxide/titanium (RuO2/Ti), iridium oxide/titanium (IrO2/Ti), platinum oxide/titanium (PtO2/Ti), and the like.

According to embodiments, the second current collector 12a is made of a catalytic material that is easy to electrolyze water, and thus the CDI module 100 may more easily generate acidic water alone.

The material of the first current collector 11a may also be the same as that of the second current collector 12a.

However, for economic reasons, in an embodiment, the materials of the first current collector 11a and the second current collector 12a may be different from each other. For example, the material of the first current collector 11a may be graphite, and the material of the second current collector 12a may be selected from the group consisting of a transition metal, transition metal oxide, transition metal alloy, aluminum, aluminum oxide, aluminum alloy, graphene, DSA, and BDD electrode.

The second porous electrode 12b may include a solid electrode including an empty space. The second porous electrode 12b may be made of a material susceptible to adsorbing ions. For example, the second porous electrode 12b may be a carbon porous electrode, but the type of second porous electrode 12b is not limited thereto.

According to various embodiments, the second porous electrode 12b may be made of a material desirable as a catalyst for electrolyzing water. For example, the material of the second porous electrode 12b may be selected from the group consisting of a transition metal, transition metal oxide, transition metal alloy, aluminum, aluminum oxide, aluminum alloy, graphene, DSA, and BDD electrode. For example, the second porous electrode 12b may include a nickel porous electrode.

The material of the first porous electrode 11b may also be the same as that of the second porous electrode 12b.

However, for economic reasons, in an embodiment, the materials of the first porous electrode 11b and the second porous electrode 12b may be different from each other. For example, the material of the first porous electrode 11b may be carbon, and the material of the second porous electrode 12b may be selected from the group consisting of a transition metal, transition metal oxide, transition metal alloy, aluminum, aluminum oxide, aluminum alloy, graphene, DSA, and BDD electrode.

The CDI module 100 may include a housing 101 having at least one inlet 102 and/or 104 and at least one outlet 103 and/or 105. In an embodiment, at least a portion of the surfaces of the housing 101 may be configured as the current collectors 11a and 12a. However, at least a portion of the surfaces of the housing 101 may also be configured as pads for supporting the current collectors 11a and 12a.

The CDI module 100 may include a first channel 11 formed by the first current collector 11a and the anion exchange membrane 11c, a second channel 12 formed by the second current collector 12a and the cation exchange membrane 12c, and a third channel 13 formed by the anion exchange membrane 11c and the cation exchange membrane 12c.

The first channel 11 may include a space between the first current collector 11a and the anion exchange membrane 11c. The second channel 12 may include a space between the second current collector 12a and the cation exchange membrane 12c. The third channel 13 may include a space between the anion exchange membrane 11c and the cation exchange membrane 12c.

The term channel may be interchangeably used with a compartment, space, room, chamber, or the like in that the first channel 11, the second channel 12, and the third channel 13 may be distinguished from each other by the ion exchange membranes 11c and 12c.

The anion exchange membrane 11c and the cation exchange membrane 12c may include a membrane through which a fluid is passable.

The first channel 11, the second channel 12, and the third channel 13 may be fluidly connected to each other. For example, fluid in the third channel 13 may be movable to the first channel 11 and/or the second channel 12, and conversely, fluid in the first channel 11 and/or the second channel 12 may be movable to the third channel 13.

The cation exchange membrane 12c may include a membrane that allows only cations to pass through among cations and anions. The cation exchange membrane 12c carries a negative charge, allowing only cations to pass through while repelling anions.

The anion exchange membrane 11c may include a membrane that allows only anions to pass through among cations and anions. The anion exchange membrane 11c carries a positive charge, allowing only anions to pass through while repelling cations.

The ion exchange membranes 11c and 12c may include synthetic resin membranes.

In response to applying a positive voltage to the first current collector 11a, the first electrode 11ab becomes a positive electrode (anode), and in response to applying a negative voltage to the second current collector 12a, the second electrode 12ab becomes a negative electrode (cathode). Accordingly, in response to applying a positive voltage to the first current collector 11a and applying a negative voltage to the second current collector 12a, the cations in the third channel 13 may move to the second channel 12, and the anions in the third channel 13 may move to the first channel 11.

Applying a positive voltage to the first current collector 11a may include applying a negative voltage to the second current collector 12a.

Applying a positive voltage to the first current collector 11a and applying a negative voltage to the second current collector 12a may include applying a positive voltage between the first current collector 11a and the second current collector 12a.

Applying a positive voltage between the first current collector 11a and the second current collector 12a may include making a potential of the first current collector 11a higher than a potential of the second current collector 12a.

In response to applying a negative voltage to the first current collector 11a, the first electrode 11ab becomes a negative electrode (cathode), and in response to applying a positive voltage to the second current collector 12a, the second electrode 12ab becomes a positive electrode (anode). Accordingly, in response to applying a negative voltage to the first current collector 11a and applying a positive voltage to the second current collector 12a, the cations in the second channel 12 may move to the third channel 13, and the anions in the first channel 11 may move to the third channel 13.

Applying a negative voltage to the first current collector 11a may include applying a positive voltage to the second current collector 12a.

Applying a negative voltage to the first current collector 11a and applying a positive voltage to the second current collector 12a may include applying a negative voltage between the first current collector 11a and the second current collector 12a.

Applying a negative voltage between the first current collector 11a and the second current collector 12a may include setting a potential of the first current collector 11a lower than a potential of the second current collector 12a.

The first channel 11 may be provided with the first porous electrode 11b, and the second channel 12 may be provided with the second porous electrode 12b.

By applying a positive voltage between the first current collector 11a and the second current collector 12a, the anions moved to the first channel 11 may be adsorbed on the first porous electrode 11b, and the cations moved to the second channel 12 may be adsorbed on the second porous electrode 12b.

By applying a negative voltage between the first current collector 11a and the second current collector 12a, the anions adsorbed on the first porous electrode 11b may be desorbed from the first porous electrode 11b, and the cations adsorbed on the second porous electrode 12b may be desorbed from the second porous electrode 12b.

In an embodiment, the housing 101 may include the first inlet 102 to allow water to be introduced into the third channel 13, and the first outlet 103 to allow water to be discharged from the third channel 13.

In an embodiment, the housing 101 may include the second inlet 104 to allow water to be introduced into the second channel 12, and the second outlet 105 to allow water to be discharged from the second channel 12.

Through the first inlet 102, external water (water from the outside the CDI module 100) may be introduced into the third channel 13. The water in the third channel 13 may be discharged to the outside of the CDI module 100 through the first outlet 103.

Through the second inlet 104, external water (water from the outside the CDI module 100) may be introduced into the second channel 12. The water in the second channel 12 may be discharged to the outside of the CDI module 100 through the second outlet 105.

The water treatment apparatus 1 may treat water supplied from a water source 15 where raw water is stored or supplied from an external source. The raw water may include water that is to be treated by the water treatment apparatus 1.

The water treatment apparatus 1 may include a pump 16 for pumping external water (e.g., water supplied from the water source).

The water treatment apparatus 1 may include the at least one flow path 20 and the at least one valve 30. The at least one flow path 20 may be branched by the at least one valve 30.

The water pumped by the pump 16 may flow into the flow paths 20 of the water treatment apparatus 1.

In an embodiment, external water may be pumped by the pump 16 and flow into a first flow path 21. The first flow path 21 may be configured to receive the external water.

A first valve 30a may allow water flowing on the first flow path 21 to flow into either a second flow path 22 or a third flow path 23. The second flow path 22 may include a flow path configured to allow water to flow from the first flow path 21 to the second channel 12. The third flow path 23 may include a flow path configured to allow water to flow from the first flow path 21 into the third channel 13.

The third flow path 23 may be connected to the first inlet 102. The second flow path 22 may be connected to the second inlet 104.

A second valve 30b may open or close the third flow path 23. The second valve 30b may block or allow water flow on the third flow path 23.

In an embodiment, the second valve 30b may be omitted in a case where the first valve 30a is capable of blocking the flow of water from the first flow path 21.

The water flowing into the third channel 13 through the third flow path 23 may be discharged to a fourth flow path 24. The fourth flow path 24 may be connected to the first outlet 103.

A fourth valve 30d may allow water flowing on the fourth flow path 24 to flow into either a first discharge flow path 26 or a second discharge flow path 27. For example, the fourth valve 30d may allow the water discharged from the third channel 13 to flow into either the first discharge flow path 26 or the second discharge flow path 27. In an embodiment, the fourth valve 30d may close the fourth flow path 24 to prevent the water flowing on the fourth flow path 24 from flowing into the first discharge flow path 26 and the second discharge flow path 27.

The first discharge flow path 26 may include a flow path through which purified water (or deionized water) is discharged. The second discharge flow path 27 may include a flow path through which contaminated water (or wastewater) is discharged.

The water flowing into the second channel 12 through the second flow path 22 may be discharged to a fifth flow path 25. The fifth flow path 25 may be connected to the second outlet 105. The fifth flow path 25 may be connected to the first inlet 102. For example, the fifth flow path 25 may include a flow path configured to allow the water discharged from the second channel 12 to flow into the third channel 13. Accordingly, the fifth flow path 25 may be referred to as a circulation flow path.

A third valve 30c may open and close the fifth flow path 25.

According to an embodiment, the water treatment apparatus 1 includes the fifth flow path 25 allowing the water discharged from the second channel 12 to flow into the third channel 13, thereby cleaning the third channel 13 using acidic water generated in the second channel 12, which will be described later.

According to various embodiments, the number of inlets 102 and 104, the number of outlets 103 and 105, the type of flow path 20, and/or the type of at least one valve 30 are not limited to the example shown in FIG. 1. For example, the water treatment apparatus 1 may also include two outlets connected to the third channel 13 and two valves for opening and closing flow paths connected to the two outlets.

In another example, the water treatment apparatus 1 may include two inlets connected to the third channel 13, and the two inlets may be connected to the third flow path 23 and the fifth flow path 25, respectively.

In an embodiment, the water treatment apparatus 1 may include at least one CDI module 100.

According to various embodiments, the water treatment apparatus 1 may include a plurality of CDI modules 100. The plurality of CDI modules 100 may each include a capacitor formed by a pair of electrodes 11ab and 12ab, and the plurality of capacitors may be connected in series or parallel with each other.

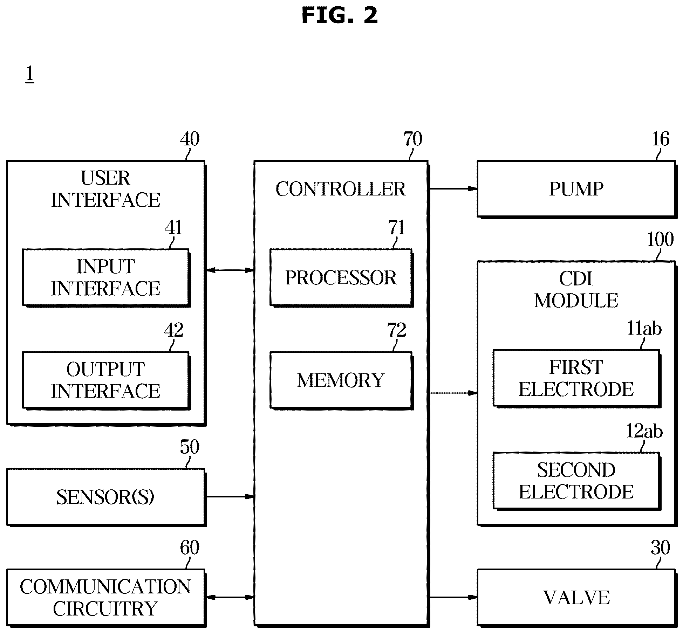

FIG. 2 is a control block diagram of a water treatment apparatus according to an embodiment.

Referring to FIG. 2, the water treatment apparatus 1 according to an embodiment may include a user interface 40, a sensor(s) 50, a communication circuitry 60, the pump 16, the at least one valve 30, the CDI module 100, and/or a controller 70.

The user interface 40 may include at least one input interface 41 and at least one output interface 42.

The at least one input interface 41 may convert sensory information received from a user into an electrical signal.

The at least one input interface 41 may include a power input interface for powering on the water treatment apparatus 1, an operation input interface for starting an operation of the water treatment apparatus 1, an operation mode selection input interface, and a setting input interface. The at least one input interface 41 may include, for example, a tact switch, a push switch, a slide switch, a toggle switch, a micro switch, a touch switch, a touch pad, a touch screen, a jog dial, and/or a microphone.

The water treatment apparatus 1 according to an embodiment may have at least three operation modes. For example, the water treatment apparatus 1 according to an embodiment may have a deionization operation mode, a regeneration operation mode, and a descaling operation mode.

In the deionization operation, the water treatment apparatus 1 may perform a deionization process for the water supplied to the CDI module 100.

In the regeneration operation, the water treatment apparatus 1 may perform a regeneration process for desorbing ions adsorbed on the electrodes 11ab and 12ab of the CDI module 100.

In the descaling operation, the water treatment apparatus 1 may perform a descaling process for removing scale generated on the electrodes 11ab and 12ab of the CDI module 100.

The operation mode selection input interface may include an interface for selecting an operation mode to be first operated, upon initiation of an operation of the water treatment apparatus 1 by the operation input interface.

Through the operation mode selection input interface, an operator of the water treatment apparatus 1 may select an operation mode of the water treatment apparatus 1 to be started first.

The setting input interface may include an interface for setting setting values for various components of the water treatment apparatus 1 (e.g., the pump 16, electrodes 11ab and 12ab).

For example, the setting input interface may include an interface for various settings, such as changing an operating RPM of the pump 16 to adjust a flow rate of water supplied to the CDI module 100, or adjusting a strength of voltage applied to the electrodes 11ab and 12ab.

The at least one output interface 42 may generate sensory information and convey various information about operations of the water treatment apparatus 1 to a user.

For example, the at least one output interface 42 may convey, to a user, an operation time of the water treatment apparatus 1, information related to the settings of the water treatment apparatus 1, and information obtained from the sensor(s) 50. The information of the water treatment apparatus 1 may be output on a screen, as an indicator, as a voice, or the like. The at least one output interface 42 may include, for example, a liquid crystal display (LCD) panel, a light emitting diode (LED) panel, a speaker, or the like.

The sensor(s) 50 may include at least one sensor for obtaining information related to an operational state of the water treatment apparatus 1.

In an embodiment, the sensor(s) 50 may include various sensors for measuring a degree of scale in the second channel 12.

For example, the sensor(s) 50 may include a water quality sensor for detecting a water quality of the water discharged through the first outlet 103.

For example, the water quality sensor may include a turbidity sensor, total dissolved solids (TDS) sensor, pH sensor, electrical conductivity sensor, hardness sensor, flow velocity sensor, and the like.

The water quality sensor may be disposed in the fourth flow path 24, the first discharge flow path 26, and/or the second discharge flow path 27 to detect the water quality of the water discharged through the first outlet 103, but the water quality sensor may be located anywhere to detect the water quality of the water discharged from the CDI module 100.

The information obtained by the sensor(s) 50 may be transmitted to the controller 70. The controller 70 may start a descaling operation based on a descaling condition being detected by the sensor(s) 50.

The descaling condition may be preset to a condition in which a relatively large amount of scale is estimated to have been deposited(accumulated or precipitated) in the first channel 11, the second channel 12, and/or the third channel 13.

For example, the controller 70 may start the descaling operation based on a TDS value measured by the TDS sensor being greater than a predetermined value. In another example, the controller 70 may start the descaling operation based on a turbidity value detected by the turbidity sensor being greater than a predetermined value.

The information obtained by the sensor(s) 50 may be output via the output interface 42.

The water treatment apparatus 1 may include the communication circuitry 60 for communicating with an external device (e.g., servers, user devices, and/or home appliances) by wire and/or wirelessly.

The communication circuitry 60 may include at least one of a short-range wireless communication module or a long-range wireless communication module.

The communication circuitry 60 may transmit data to an external device or receive data from an external device. For example, the communication circuitry 60 may establish communication with a server, a user device, and/or a home appliance, and may transmit and receive various data.

To this end, the communication circuitry 60 may support establishing a direct (e.g., wired) communication channel or a wireless communication channel between external devices, and performing communication over the established communication channel. According to an embodiment, the communication circuitry 60 may include a wireless communication module (e.g., a cellular communication module, a short-range wireless communication module, or a global navigation satellite system (GNSS) communication module) or a wired communication module (e.g., a local area network (LAN) communication module, or a power line communication module). A corresponding communication module of these communication modules may communicate with an external device via a first network (e.g., a short-range communication network such as Bluetooth, wireless fidelity (Wi-Fi) direct, or infrared data association (IrDA)) or a second network (e.g., a long-range communication network such as a legacy cellular network, 5G network, next generation communication network, the Internet, or a computer network (e.g., LAN or WAN)). These different types of communication modules may be integrated into a single component (e.g., a single chip) or may be implemented as separate components (e.g., a plurality of chips).

The short-range wireless communication module may include a Bluetooth communication module, a Bluetooth Low Energy (BLE) communication module, a near field communication (NFC) communication module, a WLAN (Wi-Fi) communication module, a Zigbee communication module, an IrDA communication module, a Wi-Fi Direct (WFD) communication module, an ultrawideband (UWB) communication module, an Ant+ communication module, a microwave (uWave) communication module, and the like, without being limited thereto.

The long-range wireless communication module may include a communication module performing various long-range wireless communications, and may include the mobile communication circuitry. The mobile communication circuitry may transmit and receive radio signals with at least one of a base station, an external terminal, or a server over a mobile communication network.

In an embodiment, the communication circuitry 60 may communicate with external devices such as servers, user devices, home appliances, and the like, through a nearby access point (AP). The AP may connect the LAN to which the water treatment apparatus 1, home appliances, and/or user devices are connected to the WAN to which the server is connected. The water treatment apparatus 1, the home appliance, and/or the user device may be connected to the server via the WAN.

The communication circuitry 60 may receive information about a water quality of the water discharged through the first outlet 103 from an external device.

For example, in a case where a sensor for detecting a water quality of the water discharged through the first outlet 103 is installed outside of the water treatment apparatus 1, the communication circuitry 60 may receive information about the water quality of the water discharged through the first outlet 103 from the sensor installed outside of the water treatment apparatus 1.

The information obtained by the communication circuitry 60 may be transmitted to the controller 70. The controller 70 may start the descaling operation, based on a descaling condition being detected from the information obtained from the external sensor through the communication circuitry 60.

The communication circuitry 60 may transmit, to an external device (e.g., a server, a user device, a home appliance), the information about the water quality obtained from the sensor(s) 50.

The controller 70 may control various components of the water treatment apparatus 1 (e.g., the user interface 40, the sensor(s) 50, the communication circuitry 60, the pump 16, the CDI module 100, and/or the at least one valve 30). For example, the controller 70 may control a voltage applied to the first electrode 11ab and the second electrode 12ab.

The controller 70 may include hardware such as a central processing unit (CPU), Micom, or memory, and software such as a control program, and the like. For example, the controller 70 may include at least one memory 72 storing data in the form of algorithms, programs, and the like for controlling operations of components of the water treatment apparatus 1, and at least one processor 71 performing the aforementioned operations and the operations to be described below using the data stored in the at least one memory 72. The memory 72 and the processor 71 may be implemented as separate chips. The processor 71 may include one or two or more processor chips, or may include one or two or more processing cores. The memory 72 may include one or two or more memory chips, or may include one or two or more memory blocks. The memory 72 and the processor 71 may also be implemented as a single chip.

The controller 70 may be electrically connected to the user interface 40, the sensor(s) 50, the communication circuitry 60, the pump 16, the CDI module 100, and/or the at least one valve 30.

The pump 16 may pump external water into the first flow path 21 according to a control signal from the controller.

The at least one valve 30 may change the flow of water flowing on the at least one flow path 20 according to a control signal from the controller 70. The at least one valve 30 may include the first valve 30a, the second valve 30b, the third valve 30c, and/or the fourth valve 30d.

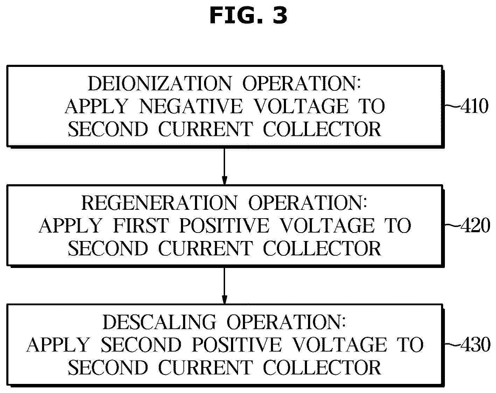

FIG. 3 is a flowchart illustrating an example of a method for controlling a water treatment apparatus according to an embodiment.

The order, operation time, operation cycle, and/or the number of times of each operation 410, 420 and 430 are not limited to that shown in FIG. 3.

For example, an operation time of a deionization operation 410 may be longer than that of a regeneration operation 420.

In an embodiment, the water treatment apparatus 1 may perform the deionization operation 410 for a first predetermined time and perform the regeneration operation 420 for a second predetermined time. In this instance, the first predetermined time may be set longer than the second predetermined time. Also, the first predetermined time and the second predetermined time may be set by a user.

In an embodiment, the water treatment apparatus 1 may perform a descaling operation 430 based on the deionization operation 410 and the regeneration operation 420 having been performed a predetermined number of times. For example, the predetermined number of times may be set by a user.

In a case where the predetermined number of times is set to a plurality of times, an operation cycle of the deionization operation 410 and an operation cycle of the regeneration operation 420 may be shorter than that of the descaling operation 430. For example, the water treatment apparatus 1 may perform each of the deionization operation 410 and the regeneration operation 420 n times (n is a natural number greater than or equal to 2), and then perform the descaling operation 430 once.

In an embodiment, the water treatment apparatus 1 may also perform the descaling operation 430 based on a predetermined condition being satisfied by the sensor(s) 50.

In another example, the water treatment apparatus 1 may perform the descaling operation 430, after the deionization operation 410 is performed or after the regeneration operation 420 is performed.

Referring to FIG. 3, the water treatment apparatus 1 according to an embodiment may perform the deionization operation, the regeneration operation, and/or the descaling operation.

The deionization operation may refer to an operation of removing ions contained in water flowing into the CDI module 100 and discharging the deionized water to the outside of the CDI module 100.

The water treatment apparatus 1 may apply a negative voltage to the second current collector 12a in the deionization operation (410).

Applying a negative voltage to the second current collector 12a may include applying a positive voltage to the first current collector 11a.

Applying a negative voltage to the second current collector 12a may include applying a negative voltage between the second current collector 12a and the first current collector 11a.

Applying a negative voltage between the second current collector 12a and the first current collector 11a may include ensuring that a difference between the voltage applied to the second current collector 12a and the voltage applied to the first current collector 11a is a negative voltage.

Applying a negative voltage to the second current collector 12a may include applying a positive voltage between the first current collector 11a and the second current collector 12a.

Applying a positive voltage between the first current collector 11a and the second current collector 12a may include ensuring that the difference between the voltage applied to the first current collector 11a and the voltage applied to the second current collector 12a is a positive voltage.

In the deionization operation, the controller 70 may apply a negative voltage to the second current collector 12a to cause cations contained in the water in the third channel 13 to move to the second channel 12.

In the deionization operation, a magnitude of the negative voltage applied to the second current collector 12a may be less than or equal to approximately 0.6 V. The magnitude of the negative voltage applied to the second current collector 12a less than or equal to 0.6 V may include that the negative voltage applied to the second current collector 12a is greater than or equal to -0.6 V.

In the deionization operation, a magnitude of the positive voltage applied to the first current collector 11a may be approximately less than or equal to 0.6 V. The magnitude of the positive voltage applied to the first current collector 11a being less than or equal to 0.6 V may include that the positive voltage applied to the first current collector 11a is equal to or less than +0.6 V.

In the deionization operation, cations in the third channel 13 may move to the second channel 12 through the cation exchange membrane 12c, and may be adsorbed on the second porous electrode 12b.

In a case where a negative voltage of a predetermined magnitude or more is applied to the second current collector 12a, a positive voltage of a predetermined magnitude or more may be applied to the first current collector 11a. In a case where the positive voltage of the predetermined magnitude or more is applied to the first current collector 11a, electrolysis of water occurs at the first electrode 11ab, which is the anode, and hydrogen ions and electrons are generated, and thus adsorption of ions may be hindered.

In the deionization operation, the magnitude of the positive voltage applied to the first current collector 11a may be preset within a range where the water in the first channel 11 is not electrolyzed.

For example, the magnitude of the positive voltage applied to the first current collector 11a in the deionization operation is preferably less than or equal to 0.6 V.

The regeneration operation may refer to an operation of desorbing the cations adsorbed on the second electrode 12ab, which was used as the cathode in the deionization operation, moving the desorbed cations to the third channel 13, and discharging wastewater containing a relatively large amount of cations to the outside of the CDI module 100.

In the regeneration operation, the water treatment apparatus 1 may apply a first positive voltage to the second current collector 12a (420).

Applying the first positive voltage to the second current collector 12a may include applying a first negative voltage to the first current collector 11a.

Applying the first positive voltage to the second current collector 12a may include applying a positive voltage between the second current collector 12a and the first current collector 11a.

Applying a positive voltage between the second current collector 12a and the first current collector 11a may include ensuring that a difference between the voltage applied to the second current collector 12a and the voltage applied to the first current collector 11a is a positive voltage.

Applying a positive voltage to the second current collector 12a may include applying a negative voltage between the first current collector 11a and the second current collector 12a.

Applying a negative voltage between the first current collector 11a and the second current collector 12a may include ensuring that the difference between the voltage applied to the first current collector 11a and the voltage applied to the second current collector 12a is a negative voltage.

In the regeneration operation, the controller 70 may apply the first positive voltage to the second current collector 12a to cause cations in the second channel 12 to move to the third channel 13.

In the regeneration operation, a magnitude of the first positive voltage applied to the second current collector 12a may be preset within a range where the water in the second channel 12 is not electrolyzed. The magnitude of the first positive voltage applied to the second current collector 12a in the regeneration operation may be equal to or similar to the magnitude of the negative voltage applied to the second current collector 12a in the deionization operation. A magnitude of the negative voltage applied to the first current collector 11a in the regeneration operation may be equal to or similar to the magnitude of the negative voltage applied to the second current collector 12a in the deionization operation.

For example, the magnitude of the first positive voltage applied to the second current collector 12a in the regeneration operation may be approximately less than or equal to 0.6 V. For example, the first positive voltage may be equal to or less than +0.6 V.

In the regeneration operation, cations adsorbed on the second porous electrode 12b may move to the third channel 13 through the cation exchange membrane 12c. In the regeneration operation, the cations adsorbed on the second porous electrode 12b may move to the water in the third channel 13 through the cation exchange membrane 12c. However, the cations in the third channel 13 are prevented from moving to the first channel 11 by the anion exchange membrane 11c.

In a case where a positive voltage greater than or equal to a predetermined magnitude (e.g., 0.6 V) is applied to the second current collector 12a, electrolysis of water occurs at the second electrode 12ab, which is an anode, and acidic water is generated. As a result, the acidic water may be discharged from the CDI module 100 when the deionization operation is performed again after the termination of the regeneration operation.

Accordingly, the magnitude of the first positive voltage applied to the second current collector 12a in the regeneration operation is preferably less than or equal to 0.6V.

The water treatment apparatus 1 may repeatedly perform the deionization operation 410 and the regeneration operation 420 at a predetermined cycle.

The water treatment apparatus 1 may perform the descaling operation based on a predetermined condition being satisfied.

The descaling operation may refer to an operation of removing scale attached to(accumulated on) the cation exchange membrane 12c and the second porous electrode 12b, unlike the regeneration operation to desorb the cations adsorbed on the second porous electrode 12b. The scale may include impurities such as metallic oxides, precipitates, and the like (e.g., CaCO3, Mg(OH)2).

By repeatedly performing the deionization operation 410 and the regeneration operation 420 at a predetermined cycle, scale may be attached to the second electrode 12ab side used as the cathode in the deionization operation 410. For example, scale may be attached to both sides of the cation exchange membrane 12c and the second porous electrode 12b.

The scale attached to both sides of the cation exchange membrane 12c and the second porous electrode 12b may reduce an efficiency of the deionization operation.

Scale may be removed by acidic water.

In existing technologies, an acidic solution such as a citric acid solution is introduced into a CDI module in order to remove scale, requiring manual addition of acidic water at each descaling cycle, which causes inconvenience.

According to embodiments, the CDI module 100 of the water treatment apparatus 1 according to an embodiment may automatically remove scale at each descaling cycle by generating acidic water on its own without a separate external device.

In the descaling operation, the water treatment apparatus 1 may apply a second positive voltage to the second current collector 12a (430).

A magnitude of the second positive voltage applied to the second current collector 12a in the descaling operation may be greater than the magnitude of the first positive voltage applied to the second current collector 12a in the regeneration operation.

Applying the second positive voltage to the second current collector 12a may include applying a second negative voltage to the first current collector 11a. A magnitude of the second negative voltage applied to the first current collector 11a in the descaling operation may be greater than the magnitude of the first negative voltage applied to the first current collector 11a in the regeneration operation.

Applying the second positive voltage to the second current collector 12a may include applying a positive voltage between the second current collector 12a and the first current collector 11a.

Applying a positive voltage between the second current collector 12a and the first current collector 11a may include ensuring that a difference between the voltage applied to the second current collector 12a and the voltage applied to the first current collector 11a is a positive voltage.

Applying a positive voltage to the second current collector 12a may include applying a negative voltage between the first current collector 11a and the second current collector 12a.

Applying a negative voltage between the first current collector 11a and the second current collector 12a may include ensuring that the difference between the voltage applied to the first current collector 11a and the voltage applied to the second current collector 12a is a negative voltage.

The magnitude of the second positive voltage applied to the second current collector 12a in the descaling operation may be preset within a range that allows electrolysis of the water in the second channel 12.

The magnitude of the first positive voltage applied to the second current collector 12a in the regeneration operation may be less than or equal to 0.6 V, whereas the magnitude of the second positive voltage applied to the second current collector 12a in the descaling operation may be greater than 0.6 V.

For example, the controller 70 may apply the first positive voltage to the second current collector 12a in the regeneration operation, and may apply the second positive voltage, greater than the first positive voltage in magnitude, to the second current collector 12a in the descaling operation.

The controller 70 may apply the second positive voltage greater than the first positive voltage in magnitude to the second current collector 12a in the descaling operation, thereby causing the water in the second channel 12 to be electrolyzed.

The controller 70 may apply the second negative voltage, greater than the first negative voltage in magnitude, between the first current collector 11a and the second current collector 12a in the descaling operation, thereby causing the water in the second channel 12 to be electrolyzed.

In the descaling operation, acidic water generated in the second channel 12 may remove scale attached to the second porous electrode 12b and the cation exchange membrane 12c.

As will be described later, according to various embodiments, the acidic water generated in the second channel 12 may be introduced into the third channel 13 through the circulation flow path 25, thereby efficiently removing scale attached to the both sides of the cation exchange membrane 12c.

The water treatment apparatus 1 may terminate the descaling operation based on a predetermined condition being satisfied.

According to embodiments, the CDI module 100 may generate acidic water on its own, thereby removing scale in the CDI module 100 without user intervention or an additional device.

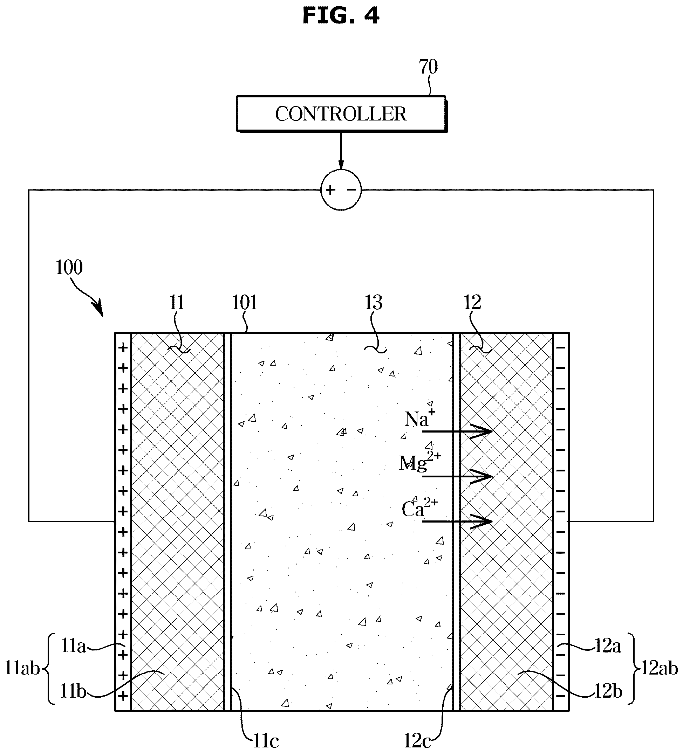

FIG. 4 is a conceptual diagram illustrating a movement of ions that occurs during a deionization operation of a water treatment apparatus according to an embodiment.

Referring to FIG. 4, the controller 70 may apply a negative voltage to the second current collector 12a in the deionization operation.

By applying a negative voltage to the second current collector 12a, cations contained in the water in the third channel 13 may move to the second channel 12.

The cations in the water may include, for example, sodium ions Na+, magnesium ions Mg2+, calcium ions Ca2+, and the like.

The cations contained in the water in the third channel 13 may be adsorbed on the second porous electrode 12b by moving to the second channel 12.

Accordingly, during the deionization operation of the water treatment apparatus 1, the cations in the water in the third channel 13 may be removed.

Applying a negative voltage to the second current collector 12a may include applying a positive voltage to the first current collector 11a.

By applying a positive voltage to the first current collector 11a, anions contained in the water in the third channel 13 may move to the first channel 11.

Because a magnitude of the positive voltage applied to the first current collector 11a in the deionization operation is preset within a range where the water in the first channel 11 is not electrolyzed, no electrolysis of water occurs at the first electrode 11ab which is the anode.

No occurrence of water electrolysis may refer to that a reaction rate of the water electrolysis reaction is significantly slow, resulting in very little electrolysis of water.

For example, no occurrence of water electrolysis at the first electrode 11ab may include no decrease in acidity of the water in the first channel 11 below pH 5 even by applying a positive voltage to the first current collector 11a for a predetermined period of time (e.g., at least 10 minutes).

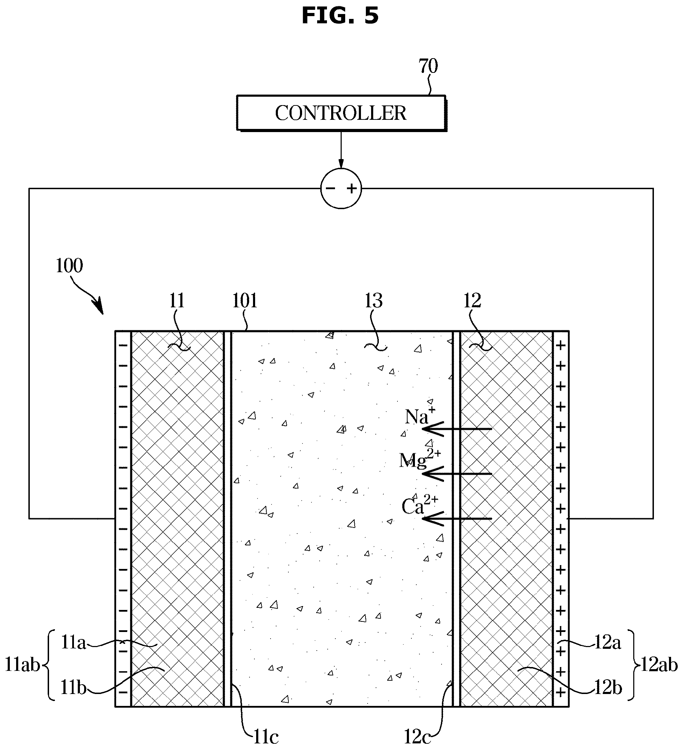

FIG. 5 is a conceptual diagram illustrating a movement of ions that occurs during a regeneration operation of a water treatment apparatus according to an embodiment.

Referring to FIG. 5, the controller 70 may apply a first positive voltage to the second current collector 12a in the regeneration operation.

By applying the first positive voltage to the second current collector 12a, cations in the second channel 12 may move to the third channel 13. The cations in the second channel 12 may include cations adsorbed on the second porous electrode 12b in the deionization operation.

The cations adsorbed on the second porous electrode 12b may include, for example, sodium ions Na+, magnesium ions Mg2+, calcium ions Ca2+, and the like.

The cations adsorbed on the second porous electrode 12b may desorb from the second porous electrode 12b and move to the third channel 13.

Cations in the third channel 13 are prevented from moving to the first channel 11 by the anion exchange membrane 11c.

Accordingly, during the regeneration operation of the water treatment apparatus 1, the cations adsorbed on the second porous electrode 12b may be desorbed, and thus an ion adsorption efficiency of the second porous electrode 12b may be regenerated.

Because a magnitude of the first positive voltage applied to the second current collector 12a in the regeneration operation is preset within a range where the water in the second channel 12 is not electrolyzed, no electrolysis of water occurs at the second electrode 12ab which is the anode.

No occurrence of water electrolysis may refer to that a reaction rate of the water electrolysis reaction is significantly slow, resulting in very little electrolysis of water.

For example, no occurrence of water electrolysis at the second electrode 12ab may include no decrease in acidity of the water in the second channel 12 below pH 5 even by applying the first positive voltage to the second current collector 12a for a predetermined period of time (e.g., at least 10 minutes).

Applying the first positive voltage to the second current collector 12a may include applying a negative voltage to the second current collector 11a.

By applying a negative voltage to the first current collector 11a, anions in the first channel 11 may move to the third channel 13. The anions in the first channel 11 may include anions adsorbed on the first porous electrode 11b in the deionization operation.

Anions in the third channel 13 are prevented from moving to the second channel 12 by the cation exchange membrane 12c.

Accordingly, during the regeneration operation of the water treatment apparatus 1, the anions adsorbed on the first porous electrode 11b may be desorbed, and thus an ion adsorption efficiency of the first porous electrode 11b may be regenerated.

The water treatment apparatus 1 may alternately perform the deionization operation and the regeneration operation. By alternately performing the deionization operation and regeneration operation, scale (e.g., calcium carbonate (CaCO3, magnesium hydroxide (Mg(OH)2)) may precipitate(deposit or accumulate) due to the movement of cations and anions. Scale may be primarily generated on the second electrode 12ab, where the concentration of cations is high, or on both sides of the cation exchange membrane 12c. The two sides of the cation exchange membrane 12c may include a side adjacent to the second channel 12 and a side adjacent to the third channel 13.

In a case where a relatively large amount of scale is precipitated on the second electrode 12ab or both sides of the cation exchange membrane 12c, not only does a space for water to flow within the second channel 12 become narrow, but also smooth ion adsorption on the second porous electrode 12b is hindered. Accordingly, an efficiency of the deionization operation may be significantly reduced.

Thus, scale precipitated in the CDI module 100 is required to be removed.

According to an embodiment of embodiments, the water treatment apparatus may perform the descaling operation, thereby removing the scale precipitated in the CDI module 100 without using an external device or user intervention.

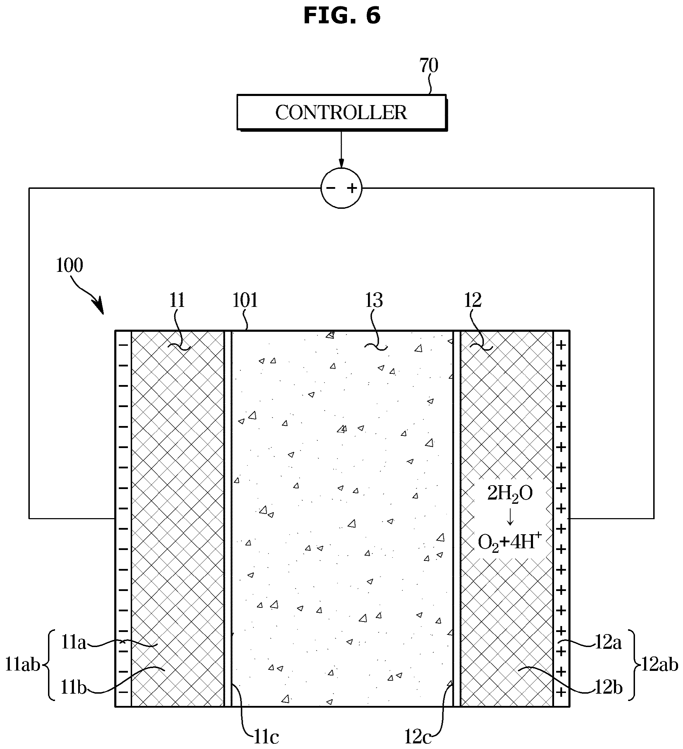

FIG. 6 is a conceptual diagram illustrating a chemical reaction that occurs during a descaling operation of a water treatment apparatus according to an embodiment.

Referring to FIG. 6, the controller 70 may apply a second positive voltage to the second current collector 12a in the descaling operation.

A magnitude of the second positive voltage applied to the second current collector 12a may be preset to a range that allows electrolysis of water at the second electrode 12ab which is the anode.

By applying the second positive voltage to the second current collector 12a, cations in the second channel 12 may move to the third channel 13. The cations in the second channel 12 may include cations adsorbed on the second porous electrode 12b in the deionization operation.

The cations adsorbed on the second porous electrode 12b may include, for example, sodium ions Na+, magnesium ions Mg2+, calcium ions Ca2+, and the like.

The cations adsorbed on the second porous electrode 12b may desorb from the second porous electrode 12b and move to the third channel 13. Meanwhile, cations in the third channel 13 are prevented from moving to the first channel 11 by the anion exchange membrane 11c.

Further, by applying the second positive voltage to the second current collector 12a, the water in the second channel 12 may be electrolyzed.

Because a magnitude of the second positive voltage applied to the second current collector 12a in the descaling operation is preset within a range where the water in the second channel 12 is electrolyzed, electrolysis of the water occurs at the second electrode 12ab which is the anode.

The occurrence of water electrolysis may include a high reaction rate of the water electrolysis reaction. In the water electrolysis, hydrogen ions are produced, which gradually decreases a pH value of the water.

The occurrence of water electrolysis at the second electrode 12ab may include a decrease in acidity of the water in the second channel 12 below pH 5 in a case where the second positive voltage is applied to the second current collector 12a for a predetermined period of time (e.g., at least 7 minutes).

The magnitude of the second positive voltage applied to the second current collector 12a in the descaling operation may be greater than the magnitude of the positive voltage applied to the first current collector 11a in the deionization operation and the magnitude of the first positive voltage applied to the second current collector 12a in the regeneration operation.

Considering a time required for the descaling operation, the descaling operation is preferably performed in a case where a relatively large amount of scale has precipitated in the CDI module 100 and the deionization performance of the water treatment apparatus 1 has been significantly reduced.

In an embodiment, the water treatment apparatus 1 may alternately perform the deionization operation and the regeneration operation, and then perform the descaling operation based only on a predetermined condition related to the amount of scale precipitation being satisfied.

According to embodiments, the water in the second channel 12 may be electrolyzed in the descaling operation, thereby generating acidic water and removing scale precipitated in the CDI module 100.

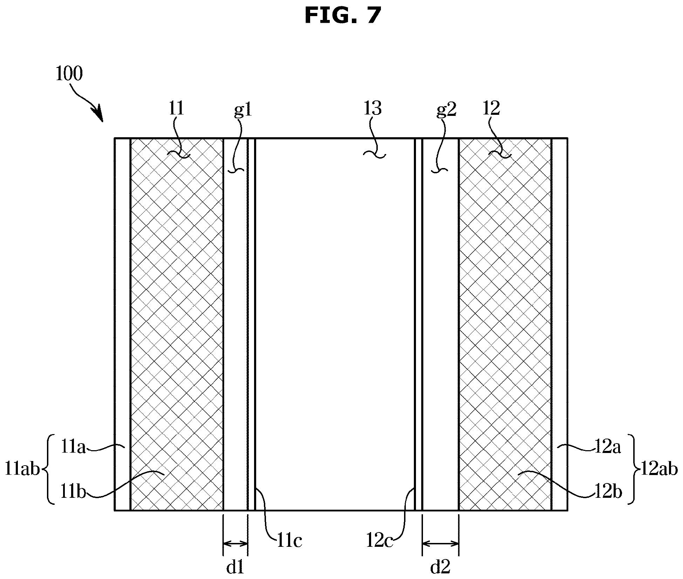

FIG. 7 is a diagram for relatively comparing between a size of a gap between a first electrode and an anion exchange membrane and a size of a gap between a second electrode and a cation exchange membrane in a water treatment apparatus according to an embodiment.

Referring to FIG. 7, a gap g1 may be formed between the first electrode 11ab and the anion exchange membrane 11c for smooth flow of fluid. For example, the gap g1 may be formed between the first porous electrode 11b and the anion exchange membrane 11c.

A gap g2 may be formed between the second electrode 12ab and the cation exchange membrane 12c for smooth flow of fluid. For example, the gap g2 may be formed between the second porous electrode 12b and the cation exchange membrane 12c.

The larger the thicknesses d1 and d2 of the gaps g1 and g2 formed between the electrodes 11ab and 12ab and the ion exchange membranes 11c and 12c, the greater the distance between the electrodes 11ab and 12ab. As a result, a strength of electric field formed between the electrodes 11ab and 12ab may be weaker. Accordingly, the thicknesses d1 and d2 of the gaps g1 and g2 formed between the electrodes 11ab and 12ab and the ion exchange membranes 11c and 12c may be minimized.

The thickness d1 of the gap g1 formed between the first electrode 11ab and the anion exchange membrane 11c may refer to the distance d1 between the first porous electrode 11b and the anion exchange membrane 11c.

The thickness d2 of the gap g2 formed between the second electrode 12ab and the cation exchange membrane 12c may refer to the distance d2 between the second porous electrode 12b and the cation exchange membrane 12c.

However, in a case where the thicknesses d1 and d2 of the gaps g1 and g2 formed between the electrodes 11ab and 12ab and the ion exchange membranes 11c and 12c are small, a space for flow of fluid in the first channel 11 or the second channel 12 may be narrow, and thus the flow of the fluid in the first channel 11 or the second channel 12 may not be smooth.

On the other hand, in the descaling operation, sufficient space for acidic water to flow around the cation exchange membrane 12c may improve a descaling performance.

In an embodiment, the thickness d1 of the gap g1 formed between the first electrode 11ab and the anion exchange membrane 11c may be smaller than the thickness d2 of the gap g2 formed between the second electrode 12ab and the cation exchange membrane 12c.

For example, the distance d1 between the first electrode 11ab and the anion exchange membrane 11c may be shorter than the distance d2 between the second electrode 12ab and the cation exchange membrane 12c.

In an embodiment, the thickness d1 of the gap g1 formed between the first electrode 11ab and the anion exchange membrane 11c may be less than 10 µm. The thickness d1 of the gap g1 formed between the first electrode 11ab and the anion exchange membrane 11c less than or equal to10 µm may include the thickness d1 of the gap g1 formed between the first electrode 11ab and the anion exchange membrane 11c of 0 µm.

The thickness d1 of the gap g1 formed between the first electrode 11ab and the anion exchange membrane 11c of 0 µm may include that the first porous electrode 11b and the anion exchange membrane 11c are in contact with each other. For example, the thickness d1 of the gap g1 formed between the first electrode 11a and the anion exchange membrane 11c of 0 µm may include no gap between the first electrode 11ab and the anion exchange membrane 11c.

In an embodiment, the thickness d2 of the gap g2 formed between the second electrode 12ab and the cation exchange membrane 12c may be greater than 10 µm. For example, the thickness d2 of the gap g2 formed between the second electrode 12ab and the cation exchange membrane 12c may be from 10 µm to 500 µm.

According to embodiments, a space through which acidic water flows in the descaling operation may be provided between the second electrode 12ab and the cation exchange membrane 12c.

According to embodiments, because acidic water may flow smoothly between the second electrode 12ab and the cation exchange membrane 12c in the descaling operation, scale precipitated around the cation exchange membrane 12c may be removed smoothly.

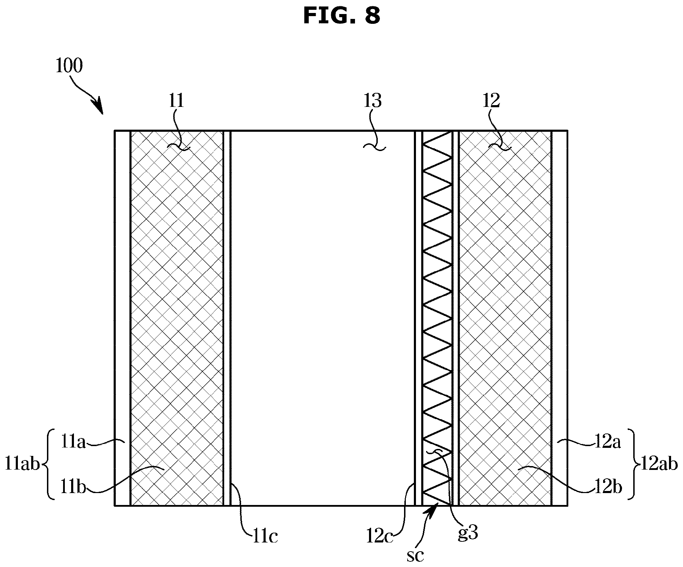

FIG. 8 illustrates an example in which a spacer is installed between the second electrode 12ab and the cation exchange membrane 12c in a water treatment apparatus according to an embodiment.

Referring to FIG. 8, in an embodiment, the CDI module 100 may include a spacer sc arranged between the second electrode 12ab and the cation exchange membrane 12c.

The spacer sc may provide a space between the second porous electrode 12b and the cation exchange membrane 12c.

The spacer sc may be configured to keep the second porous electrode 12b and the cation exchange membrane 12c spaced apart from each other without being in direct close contact.

In an embodiment, the spacer sc may be configured to maintain a distance of 10 µm or more between the second porous electrode 12b and the cation exchange membrane 12c without being in direct contact. For example, the spacer sc may be configured to maintain a distance of 10 µm to 500 µm between the second porous electrode 12b and the cation exchange membrane 12c without being in direct contact.

The spacer sc may include a flat sheet or membrane, and fluid may pass through the spacer sc.

One side of the spacer sc may face the cation exchange membrane 12c, and the other side of the spacer sc may face the second porous electrode 12b.

According to various embodiments, no spacer may be provided between the first porous electrode 11b and the anion exchange membrane 11c.

According to embodiments, due to the spacer sc between the second porous electrode 12b and the cation exchange membrane 12c, a space for acidic water to flow in the descaling operation may be provided between the second electrode 12ab and the cation exchange membrane 12c.

According to embodiments, acidic water may flow smoothly in the space formed by the spacer sc during the descaling operation, thereby smoothly removing scale precipitated around the cation exchange membrane 12c.

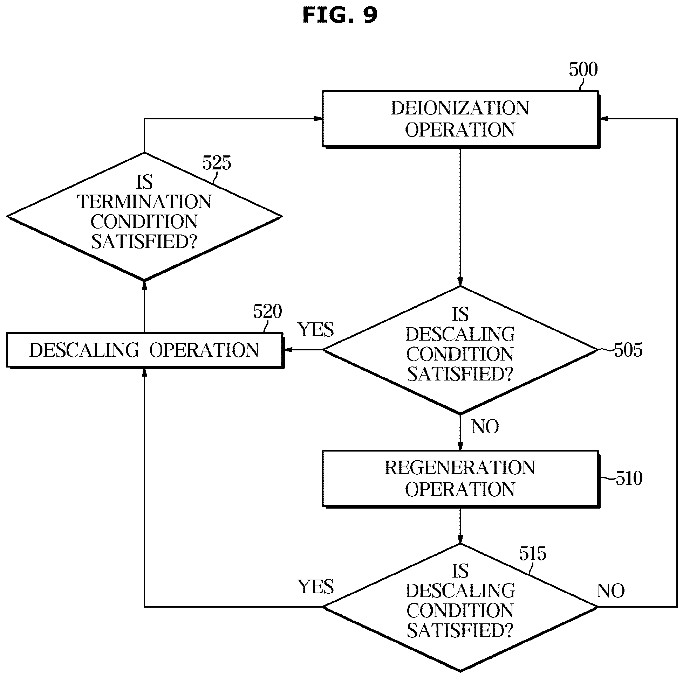

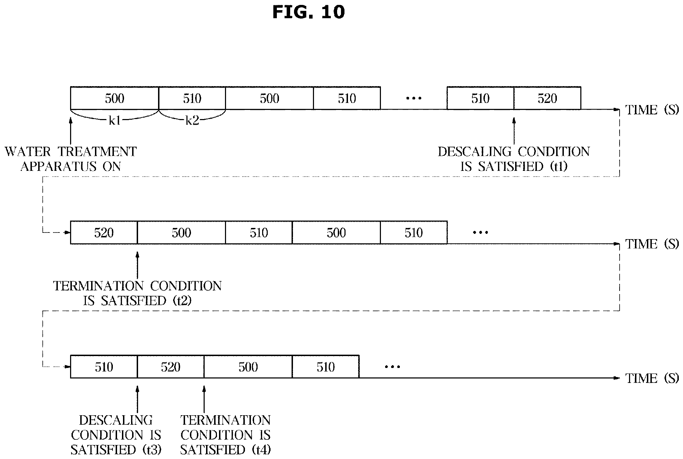

FIG. 9 is a flowchart illustrating an example of a method for controlling a water treatment apparatus according to an embodiment. FIG. 10 is a conceptual diagram illustrating time periods of a deionization operation, a regeneration operation, and a descaling operation performed by a water treatment apparatus according to an embodiment.

Referring to FIG. 9 and FIG. 10, the water treatment apparatus 1 may proceed with water treatment processes based on a condition for starting water treatment being satisfied.

For example, the controller 70 may proceed with the water treatment processes in response to receiving a user input to start the water treatment processes via the at least one input interface 41.

In another example, the controller 70 may proceed with the water treatment processes in response to receiving a control command to start the water treatment processes from an external device (e.g., a remote control device, a user device, etc.) via the communication circuitry 60.

The water treatment processes may include a deionization operation and a regeneration operation.

The controller 70 may repeatedly perform a deionization operation 500 and a regeneration operation 510 based on the start of the water treatment processes.

The controller may alternately perform the deionization operation 500 and the regeneration operation 510. For example, the controller may repeat performing the regeneration operation 510 after the termination of the deionization operation 500, and performing the deionization operation 500 after the termination of the regeneration operation 510.

In an embodiment, the controller 70 may perform the deionization operation 500 for a first predetermined time k1, and may perform the regeneration operation 510 for a second predetermined time k2 based on the termination of the deionization operation 500.

For example, the first predetermined time k1 may be set longer than the second predetermined time k2. In addition, the first predetermined time k1 and the second predetermined time k2 may be set based on a user input via the at least one input interface 41 and/or a user input received from an external device via the communication circuitry 60.

In an embodiment, the controller 70 may perform the regeneration operation 510 based on a predetermined condition being satisfied by the sensor(s) 50, while continuously performing the deionization operation 500.

For example, the sensor(s) 50 may include an electrical conductivity sensor, and the controller 70 may perform the regeneration operation 510 for a predetermined time based on an electrical conductivity of the water discharged through the first outlet 103 falling below a predetermined value while performing the deionization operation 500.

As such, the controller 70 may repeatedly perform only the deionization operation 500 and the regeneration operation 510, unless a descaling condition is satisfied.

The controller 70 may perform a descaling operation 520 based on the descaling condition being satisfied (Yes in operation 505 or Yes in operation 515) during the water treatment process.

For example, the controller 70 may perform the descaling operation 520 based on the descaling condition being satisfied (Yes in operation 505) while performing the deionization operation 500.

In an embodiment, the controller 70 may perform the descaling operation 520 at a time point t1 that the descaling condition is satisfied, while performing the deionization operation 500.

According to various embodiments, in a case where the descaling condition is satisfied while performing the deionization operation 500, the controller 70 may also perform the descaling operation 520 at a time that the deionization operation 500 ends.

The controller 70 may perform the descaling operation 520 based on the descaling condition being satisfied (Yes in operation 515) while performing the regeneration operation 510.

In an embodiment, the controller 70 may perform the descaling operation 520 at a time t3 that the descaling condition is satisfied, while performing the regeneration operation 510.

According to various embodiments, in a case where the descaling condition is satisfied while performing the regeneration operation 510, the controller 70 may also perform the descaling operation 520 at a time that the regeneration operation 510 ends.

The controller 70 may terminate the descaling operation, based on a condition for terminating the descaling operation (hereinafter referred to as the "termination condition") being satisfied (525) while performing the descaling operation 520.

In an embodiment, the controller 70 may immediately terminate the descaling operation 520, based on the termination condition being satisfied (525) while performing the descaling operation 520, and then may perform the regeneration operation 510 for a predetermined time, thereby discharging acidic water to the second discharge flow path 27.

In an embodiment, based on the termination condition being satisfied (525) while performing the descaling operation 520, the controller 70 may discharge the acidic water to the second discharge flow path 27 by operating only the pump 16 for a predetermined time while suspending application of positive voltage to the second current collector 12a, and then may terminate the descaling operation.

In an embodiment, the controller 70 may perform the deionization operation 500 based on the termination of the descaling operation.

During the descaling operation, scale attached to the cation exchange membrane 12c and the second porous electrode 12b may be removed, and at the same time cations adsorbed on the second porous electrode 12b may also be desorbed. Accordingly, the controller 70 may perform the deionization operation 500 upon termination of the descaling operation, regardless of whether the process previously performed was the deionization operation 500 or the regeneration operation 510.

In an example, the controller 70 may perform the descaling operation 520 based on the descaling condition being satisfied while performing the deionization operation 500, and may restart the deionization operation 500 upon termination of the descaling operation 520.

In another example, the controller 70 may perform the descaling operation 520 based on the descaling condition being satisfied while performing the regeneration operation 510, and may restart the deionization operation 500 upon termination of the descaling operation 520.

According to embodiments, a deionization efficiency of the water treatment apparatus 1 may be improved by omitting the unnecessary regeneration operation 510 after the descaling operation 520 is performed.

According to various embodiments, the controller 70 may restart a previously performed operation upon termination of the descaling operation 520.

The application of the second positive voltage to the second current collector 12a may generate acidic water, and in a case where the descaling operation is terminated before the generated acidic water is discharged as wastewater, the acidic water may remain within the second channel and/or the third channel. In a case where the deionization operation 500 is performed immediately with the acidic water remaining in the second channel and/or the third channel, the acidic water may be discharged to the first discharge flow path 26.

To address the above, according to various embodiments, the controller 70 may perform the regeneration operation 510 upon termination of the descaling operation, regardless of whether the process previously performed was the deionization operation 500 or the regeneration operation 510.

In an example, the controller 70 may perform the descaling operation 520 based on the descaling condition being satisfied while performing the deionization operation 500, and may restart the regeneration operation 510 upon termination of the descaling operation 520.

In another example, the controller 70 may perform the descaling operation 520 based on the descaling condition being satisfied while performing the regeneration operation 510, and may restart the regeneration operation 510 upon termination of the descaling operation 520.

According to embodiments, the acidic water generated during the descaling operation may be prevented from being discharged to the first discharge flow path 26.

The descaling condition may be preset to a condition in which a relatively large amount of scale is estimated to have been deposited in the first channel 11, the second channel 12, and/or the third channel 13.

In an embodiment, the controller 70 may determine whether the descaling condition is satisfied based on information obtained from the sensor(s) 50.

The controller 70 may perform the descaling operation based on the descaling condition being satisfied by the sensor(s) 50.

Performing the descaling operation based on the descaling condition being satisfied by the sensor(s) 50 may include performing the descaling operation in response to determination that the descaling condition is satisfied based on the information obtained from the sensor(s) 50.

For example, the descaling condition may include at least one of a TDS value measured by a TDS sensor of the sensor(s) 50 being greater than a predetermined value, a turbidity value detected by a turbidity sensor of the sensor(s) 50 being greater than a predetermined value, a pH value detected by a pH sensor of the sensor(s) 50 being within a predetermined pH range, an electrical conductivity detected by an electrical conductivity sensor of the sensor(s) 50 being within a predetermined electrical conductivity range, a hardness value detected by a hardness sensor of the sensor(s) 50 being greater than a predetermined value, and/or a flow rate detected by a flow rate sensor of the sensor(s) 50 being slower than a predetermined flow rate.

Examples of the descaling condition that may be detected based on the information obtained by the sensor(s) 50 are not limited to the examples described above.

According to various embodiments, in response to receiving sensor data from an external sensor (e.g., turbidity sensor, TDS sensor, pH sensor, electrical conductivity sensor, hardness sensor, flow rate sensor, etc.) via the communication circuitry 60, the controller 70 may determine whether the descaling condition is satisfied based on the sensor data obtained via the communication circuitry 60.

The descaling condition may include receipt of a command for descaling.

In an embodiment, the controller 70 may determine that the descaling condition is satisfied in response to receiving the command for descaling via the input interface 41 and/or the communication circuitry 60.

The descaling condition may include the cumulative number of deionization operations 500 exceeding a predetermined number.

In an embodiment, the controller 70 may determine that the descaling condition is satisfied, based on the deionization operation 500 having been performed more than a predetermined number of times.

For example, the controller 70 may initialize the cumulative number of deionization operations 500, based on the descaling operation having been performed.

The termination condition may be preset to a condition in which the scale deposited in the first channel 11, the second channel 12, and/or the third channel 13 is estimated to have been largely removed.

In an embodiment, the controller 70 may determine whether the termination condition is satisfied based on the information obtained from the sensor(s) 50.

For example, the termination condition may include at least one of a TDS value measured by the TDS sensor of the sensor(s) 50 being less than a predetermined value, a turbidity value detected by the turbidity sensor of the sensor(s) 50 being less than a predetermined value, a pH value detected by the pH sensor of the sensor(s) 50 being outside a predetermined pH range, an electrical conductivity detected by the electrical conductivity sensor of the sensor(s) 50 being outside a predetermined electrical conductivity range, a hardness value detected by the hardness sensor of the sensor(s) 50 being less than a predetermined value, and/or a flow rate detected by the flow rate sensor of the sensor(s) 50 being faster than a predetermined flow rate. For example, for safety margin, the predetermined value, predetermined range, and/or predetermined flow rate for determining the termination condition may be different from the predetermined value, predetermined range, and/or predetermined flow rate for determining the descaling condition.

Examples of termination conditions that may be detected based on the information obtained by the sensor(s) 50 are not limited to the examples described above.

According to various embodiments, in response to receiving sensor data from an external sensor (e.g., turbidity sensor, TDS sensor, pH sensor, electrical conductivity sensor, hardness sensor, flow rate sensor, etc.) via the communication circuitry 60, the controller 70 may determine whether the termination condition is satisfied based on the sensor data obtained via the communication circuitry 60.

The descaling condition may include receipt of a command to terminate the descaling operation.

In an embodiment, the controller 70 may determine that the termination condition is satisfied in response to receiving a command to terminate the descaling operation via the input interface 41 and/or the communication circuitry 60.

The descaling condition may include an operation time of the descaling operation exceeding a predetermined period of time.

In an embodiment, the controller 70 may determine that the termination condition is satisfied, based on the operation time of the descaling operation exceeding the predetermined period of time.

As described above, in an embodiment, based on the termination condition being satisfied, the controller 70 may discharge the acidic water to the second discharge flow path 27 by operating only the pump 16 for a predetermined time while suspending application of positive voltage to the second current collector 12a, and then may terminate the descaling operation. The controller 70 may perform the deionization operation 500 at the time points t2 and t4 that the descaling operation ends.

In an embodiment, the controller 70 may immediately terminate the descaling operation based on the termination condition being satisfied, and the controller 70 may perform the regeneration operation 510 based on the termination of the descaling operation in order to discharge the acidic water generated during the descaling operation to the second discharge flow path 27.

According to embodiments, the descaling operation may be performed only in a case where a large amount of scale has been deposited in the water treatment apparatus 1, and thus the efficiency of water treatment may be improved.

According to embodiments, after discharging all of the acidic water generated during the descaling operation as wastewater, the water treatment apparatus 1 may proceed with the water treatment processes again.

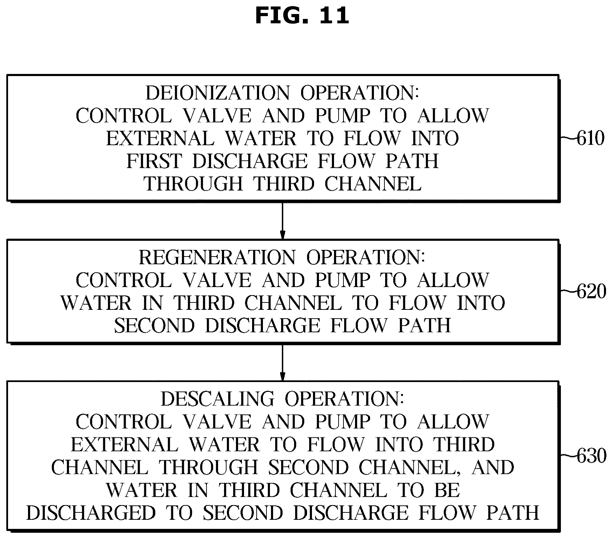

FIG. 11 is a flowchart illustrating an example of a method for controlling a water treatment apparatus according to an embodiment.

The order, operation time, operation cycle, and/or the number of times of each operation 610, 620 and 630 are not limited to that shown in FIG. 11.

Referring to FIG. 11, the water treatment apparatus 1 according to an embodiment may control the at least one valve 30 and/or the pump 16 based on an algorithm corresponding to each of the operation modes, i.e., deionization operation, regeneration operation, and/or descaling operation.

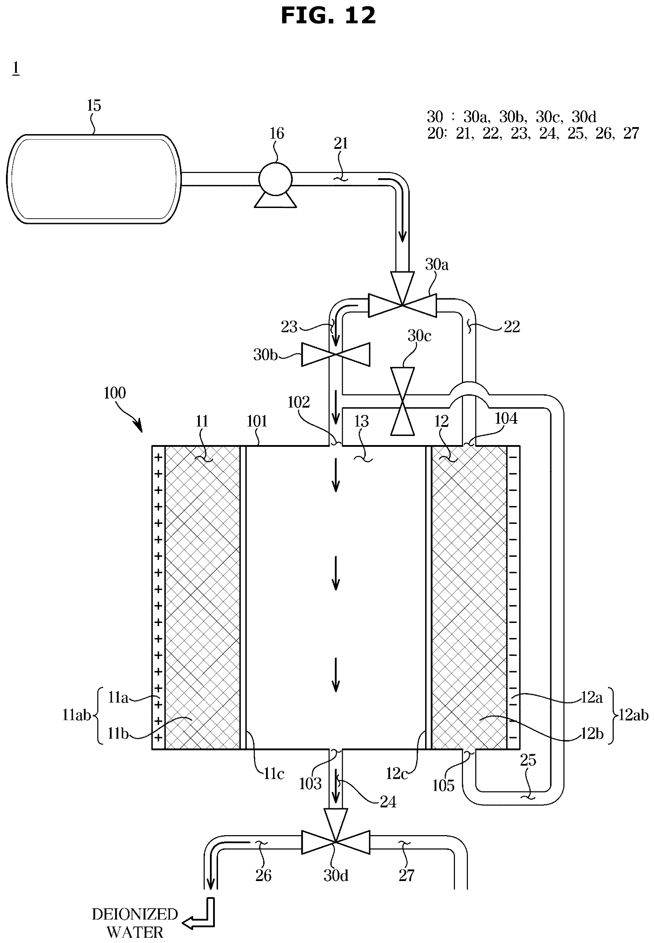

FIG. 12 illustrates an example of water flow in a deionization operation of a water treatment apparatus according to an embodiment.

FIG. 12 illustrates that water introduced into the CDI module 100 from the outside passes through the third channel 13 and is discharged to the first discharge flow path 26.

In the deionization operation, the controller 70 may control the at least one valve 30 and/or the pump 16 to allow external water to flow into the first discharge flow path 26 through the third channel 13 (610).

For example, in the deionization operation, the controller 70 may operate the pump 16 to cause external water to flow into the first flow path 21.

In the deionization operation, the controller 70 may control the first valve 30a to cause the water pumped into the first flow path 21 to flow into the third flow path 23.

In the deionization operation, the controller 70 may open the second valve 30b to cause water flowing on the third flow path 23 to flow into the third channel 13 through the first inlet 102.

In the deionization operation, the controller 70 may control the fourth valve 30d to cause water in the third channel 13 to flow into the first discharge flow path 26 through the first outlet 103.

In the deionization operation, the controller 70 may close the third valve 30c to prevent water flowing in the circulation flow path 25 from flowing into the third channel 13.

According to various embodiments, the structure of the flow path 20 and the arrangement of the at least one valve 30 may vary. For example, the housing 101 may include an outlet connected to the first discharge flow path 26 and an outlet connected to the second discharge flow path 27, and an opening and closing valve may be installed in each of the outlet connected to the first discharge flow path 26 and the outlet connected to the second discharge flow path 27.

In another example, the first flow path 21 may branch into the second flow path 22 and the third flow path 23, and an opening and closing valve may be installed in each of the second flow path 22 and the third flow path 23.

In the deionization operation, the controller 70 may control a maximum operating RPM of the pump 16 to a first target RPM. For example, the first target RPM may be preset to secure sufficient time for ions in the water flowing into the third channel 13 to be removed, when the water flowing into the third channel 13 flows to the fourth flow path 24.

According to embodiments, in the deionization operation of the water treatment apparatus, external water may be deionized through the third channel 13 and may be discharged to the first discharge flow path 26.

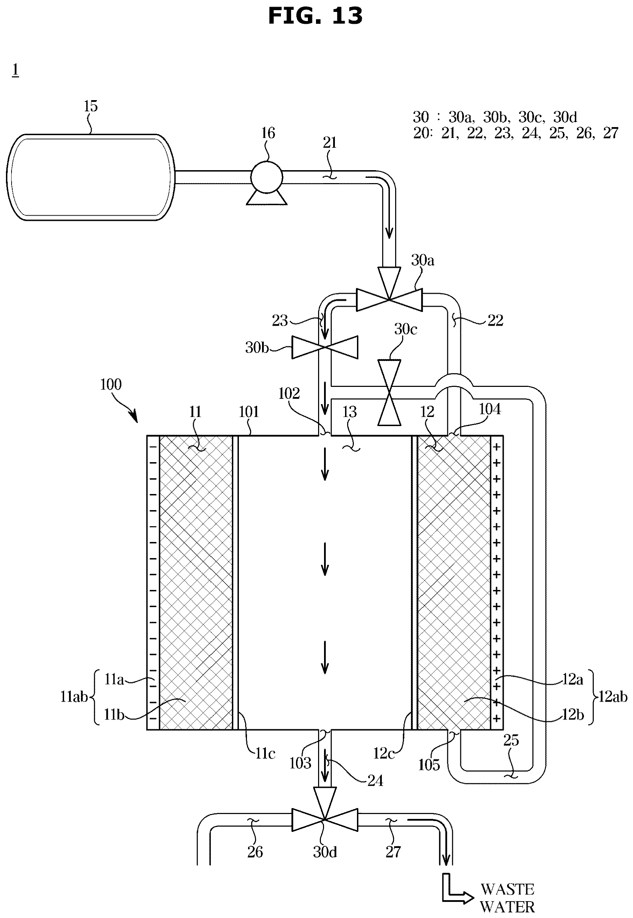

FIG. 13 illustrates an example of water flow in a regeneration operation of a water treatment apparatus according to an embodiment.

FIG. 13 illustrates that water introduced into the CDI module 100 from the outside passes through the third channel 13 and is discharged to the second discharge flow path 27.

In the regeneration operation, the controller 70 may control the at least one valve 30 and/or the pump 16 to allow water in the third channel 13 to flow into the second discharge flow path 27 (620).

In an embodiment, in the regeneration operation, the controller 70 may operate the pump 16 to cause external water to flow into the first flow path 21.

In the regeneration operation, the controller 70 may control the first valve 30a to cause the water pumped into the first flow path 21 to flow into the third flow path 23.

In the regeneration operation, the controller 70 may open the second valve 30b to cause water flowing on the third flow path 23 to flow into the third channel 13 through the first inlet 102.

In the regeneration operation, the controller 70 may control the fourth valve 30d to cause water in the third channel 13 to flow into the second discharge flow path 27 through the first outlet 103.

In the regeneration operation, the controller 70 may close the third valve 30c to prevent water flowing in the circulation flow path 25 from flowing into the third channel 13.

In an embodiment, the controller 70 may operate the pump 16 based on the start of regeneration operation.

In an embodiment, the controller 70 may continuously operate the pump 16 during the regeneration operation.

In an embodiment, in the regeneration operation, the controller 70 may also operate the pump 16 after applying a first positive voltage to the second current collector 12a for a predetermined time.

In an embodiment, in the regeneration operation, the controller 70 may repeat the process of applying the first positive voltage to the second current collector 12a for a predetermined time and then operating the pump 16 for a predetermined time a predetermined number of times.

In the regeneration operation, the controller 70 may control a maximum operating RPM of the pump 16 to a second target RPM. For example, the second target RPM may be preset to secure sufficient time for ions desorbed from the electrodes 11ab and 12ab to move to the water flowing into the third channel 13, when the water flowing into the third channel 13 flows to the fourth flow path 24.

According to various embodiments, the first target RPM, which is the maximum operating RPM of the pump 16 in the deionization operation, may be the same as the second target RPM which is the maximum operating RPM of the pump 16 in the regeneration operation. For example, the first target RPM, which is the maximum operating RPM of the pump 16 in the deionization operation, and the second target RPM, which is the maximum operating RPM of the pump 16 in the regeneration operation, may be a first RPM.

The controller 70 may control the maximum operating RPM of the pump 16 in the deionization operation to be the first RPM, and may control the maximum operating RPM of the pump 16 in the regeneration operation to be the first RPM.

According to various embodiments, the first target RPM, which is the maximum operating RPM of the pump 16 in the deionization operation, may be different from the second target RPM which is the maximum operating RPM of the pump 16 in the regeneration operation.

In an example, the controller 70 may control the maximum operating RPM of the pump 16 in the deionization operation to the first RPM, and may control the maximum operating RPM of the pump 16 in the regeneration operation to be in a range equal to or less than the first RPM.

In another example, the controller 70 may control the maximum operating RPM of the pump 16 in the regeneration operation to be the first RPM, and may control the maximum operating RPM of the pump 16 in the deionization operation to be in a range equal to or less than the first RPM.

According to embodiments, by operating the pump 16 after the ions adsorbed on the first electrode 11ab and the second electrode 12ab desorb and move to the third channel 13, waste of water used in the regeneration operation may be prevented.

According to embodiments, in the regeneration operation of the water treatment apparatus 1, ions desorbed from the first electrode 11ab and the second electrode 12ab may be discharged to the second discharge flow path 27.

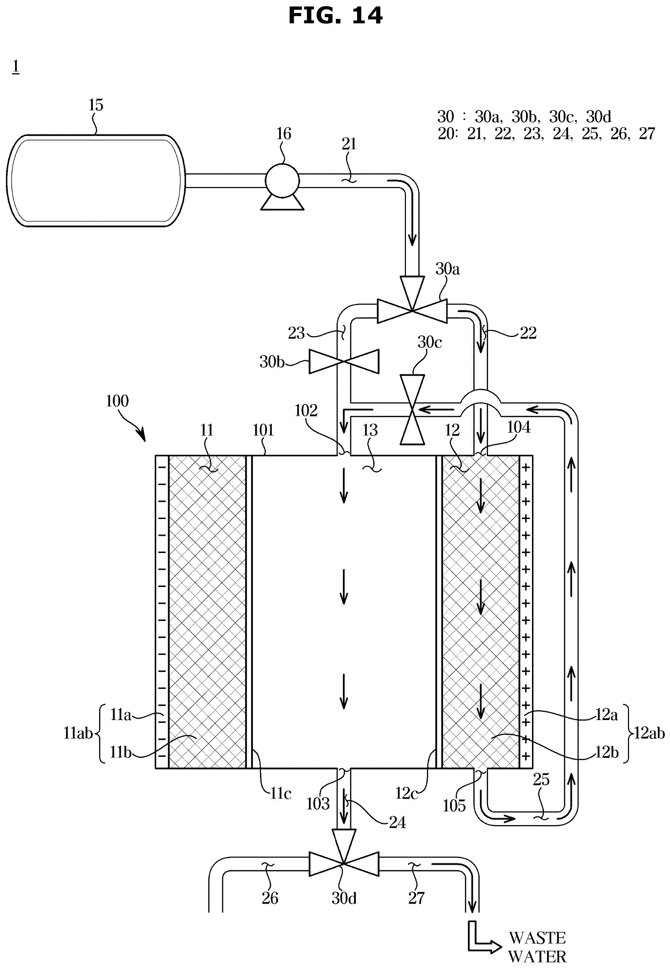

FIG. 14 illustrates an example of water flow during a descaling operation of a water treatment apparatus according to an embodiment.

FIG. 14illustrates that water introduced into the CDI module 100 from the outside passes through the second channel 12 and then flows into the third channel 13 through the first inlet 102, and the water in the third channel 13 is discharged to the second discharge flow path 27.

According to various embodiments, the structure of the flow path 20 and the arrangement of the at least one valve 30 may vary. For example, the water treatment apparatus 1 may not include the circulation flow path 25. In a case where the water treatment apparatus does not include the circulation flow path 25, the second outlet 105 may be connected to the second discharge flow path 27, and the water introduced into the CDI module 100 from the outside may be discharged directly to the second discharge flow path 27 after passing through the second channel 12.

In an embodiment, in the descaling operation, the controller 70 may control the at least one valve 30 and/or the pump 16 to allow external water to flow into the third channel 13 through the second channel 12, and the water in the third channel 13 to be discharged to the second discharge flow path 27 (630).

For example, in the descaling operation, the controller 70 may operate the pump 16 to cause external water to flow into the first flow path 21.

In the descaling operation, the controller 70 may control the first valve 30a to cause the water pumped into the first flow path 21 to flow into the second flow path 22.

The water flowing into the second flow path 22 may flow into the circulation flow path 25 through the second channel 12.

In the descaling operation, the controller 70 may open the third valve 30c to cause water flowing in the circulation flow path 25 to flow into the third channel 13 through the first inlet 102.

In the descaling operation, the controller 70 may control the fourth valve 30d to cause water in the third channel 13 to flow into the second discharge flow path 27 through the first outlet 103.

According to embodiments, in the descaling operation, acidic water generated in the second channel 12 may remove scale attached to the second electrode 12ab and/or one side of the cation exchange membrane 12c, and as the acidic water generated in the second channel 12 moves to the third channel 13, scale attached to the first electrode 11ab, the anion exchange membrane 11c, and/or the other side of the cation exchange membrane 12c may be removed.

In an embodiment, the controller 70 may operate the pump 16 based on the start of the descaling operation.

In an embodiment, the controller 70 may continuously operate the pump 16 during the descaling operation.

In an embodiment, in the descaling operation, the controller 70 may operate the pump 16 after applying a second positive voltage to the second current collector 12a for a predetermined time.

For example, the predetermined time may be preset to be a period of time that allows pH of the water in the second channel 12 to fall below 4.

In an embodiment, in the descaling operation, the controller 70 may increase an operating RPM of the pump 16 for a predetermined time. In the descaling operation, the controller 70 may increase the operating RPM of the pump 16 to a maximum operating RPM for a predetermined time.

In the descaling operation, the controller 70 may control the maximum operating RPM of the pump 16 to a third target RPM.

For example, the third target RPM may be preset to ensure sufficient mechanical cleaning force to remove the precipitated scale, while water flowing into the third channel 13 flows to the fourth flow path 24, or while water flowing into the second channel 12 through the second inlet 104 flows to the circulation flow path 25.

The first target RPM, which is the maximum operating RPM of the pump 16 in the deionization operation, and/or the second target RPM, which is the maximum operating RPM of the pump 16 in the regeneration operation, may be less than the third target RPM which is the maximum operating RPM of the pump 16 in the descaling operation.

The controller 70 may control the maximum operating RPM of the pump 16 to a first RPM in the deionization operation and/or regeneration operation, and may control the maximum operating RPM of the pump 16 to a second RPM greater than the first RPM in the descaling operation.

The controller 70 may control the maximum operating RPM of the pump 16 to be equal to or less than the first RPM in the deionization operation and/or regeneration operation, and may control the maximum operating RPM of the pump 16 to the second RPM greater than the first RPM in the descaling operation.

According to embodiments, the controller 70 may increase the operating RPM of the pump 16 for a predetermined time in the descaling operation, thereby enhancing a physical cleaning force due to the increased flow rate.

In an embodiment, in the descaling operation, the controller 70 may repeat the process of applying the second positive voltage to the second current collector 12a for a predetermined time and then operating the pump 16 for a predetermined time a predetermined number of times.

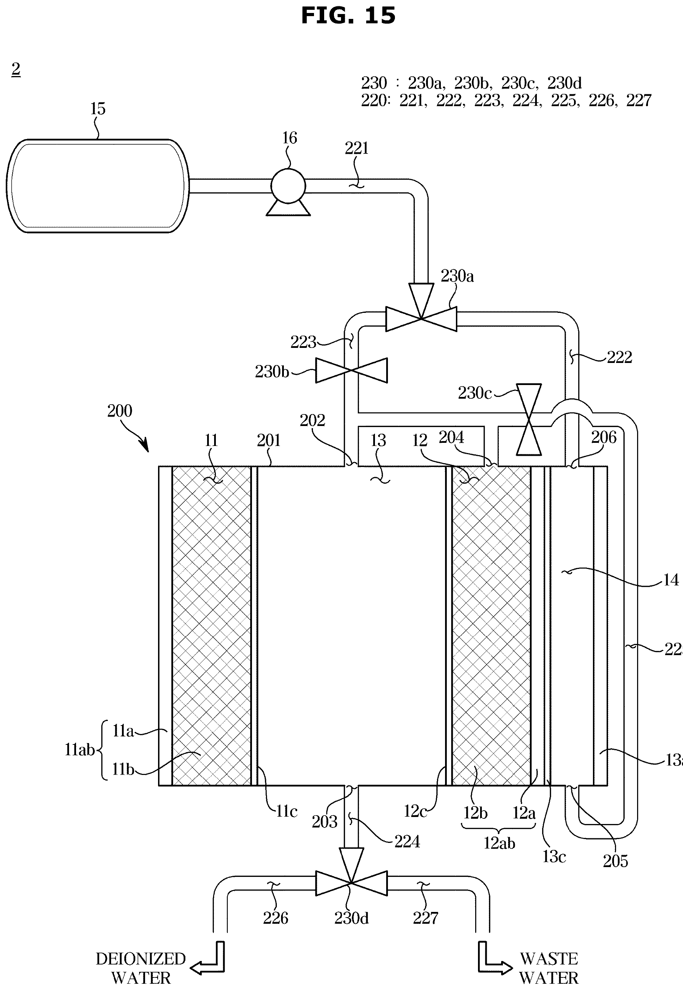

FIG. 15 is a conceptual diagram illustrating another example of a water treatment apparatus according to an embodiment.

To avoid duplication of description, configurations that have been described in the water treatment apparatus 1 shown in FIG. 1 and are identical to those of the water treatment apparatus 2 shown in FIG. 15 are described with the same reference numerals.

Referring to FIG. 15, the water treatment apparatus 2 according to an embodiment may include a capacitive deionization (CDI) module 200, at least one flow path 220 formed by pipes, and at least one valve 230 adjusting water flow in the at least one flow path 220.

The CDI module 200 may include electrodes 11ab and 12ab, a third current collector 13a, and ion exchange membranes 11c, 12c and 13c.

The first electrode 11ab and the second electrode 12ab may be disposed opposite to each other, and the first electrode 11ab and the second electrode 12ab disposed opposite to each other may form a capacitor.

The first electrode 11ab may include a first current collector 11a and a first porous electrode 11b.

The first electrode 11ab may be a positive electrode (anode) during a deionization operation of the water treatment apparatus 2, and may be a negative electrode (cathode) during a regeneration operation of the water treatment apparatus 2.

In an embodiment, the first current collector 11a may include a pole plate electrically connected to the first porous electrode 11b. The pole plate may include a metallic plate and/or a non-metallic plate.

A material of the first current collector 11a may be a conductor. For example, the material of the first current collector 11a may be graphite, without being limited thereto.

The first porous electrode 11b may include a solid electrode including an empty space. The first porous electrode 11b may be made of a material that is susceptible to adsorbing ions. For example, the first porous electrode 11b may be a carbon porous electrode, but the type of the first porous electrode 11b is not limited thereto.

The second electrode 12ab may include a second current collector 12a and a second porous electrode 12b.

The second electrode 12ab may be a negative electrode (cathode) during the deionization operation or a descaling operation of the water treatment apparatus 2, and may be a positive electrode (anode) during the regeneration operation of the water treatment apparatus 2.

In an embodiment, the second current collector 12a may include a pole plate electrically connected to the second porous electrode 12b. The pole plate may include a metallic plate and/or a non-metallic plate.

A material of the second current collector 12a may be a conductor.

The second porous electrode 12b may include a solid electrode including an empty space. The second porous electrode 12b may be made of a material that is susceptible to adsorbing ions. For example, the second porous electrode 12b may be a carbon porous electrode, but the type of second porous electrode 12b is not limited thereto.

The second current collector 12a and the third current collector 13a may be disposed opposite to each other, and the second current collector 12a and the third current collector 13a disposed opposite to each other may form a capacitor.

In the descaling operation of the water treatment apparatus 2, acidic water may be generated by electrolyzing water at the third current collector 13a. In order to electrolyze water at the third current collector 13a, a relatively large voltage is required to be applied to the third current collector 13a, which may result in a relatively large consumption of electrical energy in the descaling operation.

In an embodiment, the third current collector 13a may be made of a material desirable as a catalyst for the electrolysis of water. The third current collector 13a may be formed of a material that may allow an aqueous solution of 1000 ppm of NaCl to reach less than or equal to pH 4 at a current density of 25 mA/cm2 within less than or equal to 7 minutes.

For example, a material of the third current collector 13a may be selected from the group consisting of a transition metal, transition metal oxide, transition metal alloy, aluminum, aluminum oxide, aluminum alloy, graphene, dimensionally stable anode (DSA), and boron doped diamond (BDD) electrode.

The transition metal may include, for example, Pt, Ru, Ir, Rh, Ni, Fe, Co, Cu, and the like. The transition metal alloy may include, for example, Ni-containing materials such as NiCo, Ni/B, and the like.

In an embodiment, the transition metal alloy may include an alloy of transition metal oxides.

The DSA may include a Ti material coated with a metal oxide. The DSA may include, for example, RuO2/Ti, IrO2/Ti, or PtO2/Ti.

According to embodiments, the third current collector 13a is made of a catalytic material that is easy to electrolyze water, and thus the CDI module 200 may easily generate acidic water on its own.

The material of the first current collector 11a and the second current collector 12a may be the same as that of the third current collector 13a.

However, for economic reasons, in an embodiment, the materials of the first current collector 11a, the second current collector 12a and the third current collector 13a may be different from each other. For example, the material of the first current collector 11a and second current collector 12a may be graphite, and the material of the third current collector 13a may be selected from the group consisting of a transition metal, transition metal oxide, transition metal alloy, aluminum, aluminum oxide, aluminum alloy, graphene, DSA, and BDD electrode.

The CDI module 200 may include a housing 201 having at least one inlet 202, 204 and/or 206 and at least one outlet 203 and/or 205. In an embodiment, at least a portion of the surfaces of the housing 201 may be configured as the current collectors 11a and 12a. However, at least a portion of the surfaces of the housing 201 may also be configured as pads for supporting the current collectors 11a and 12a.

The CDI module 200 may include a first channel 11 formed by the first current collector 11a and an anion exchange membrane 11c, a second channel 12 formed by the second current collector 12a and a first cation exchange membrane 12c, a third channel 13 formed by the anion exchange membrane 11c and the first cation exchange membrane 12c, and a fourth channel 14 formed by a second cation exchange membrane 13c and the third current collector 13a.

The first channel 11 may include a space between the first current collector 11a and the anion exchange membrane 11c. The second channel 12 may include a space between the second current collector 12a and the first cation exchange membrane 12c. The third channel 13 may include a space between the anion exchange membrane 11c and the first cation exchange membrane 12c. The fourth channel 14 may include a space between the second cation exchange membrane 13c and the third current collector 13a.

The term channel may be interchangeably used with a compartment, space, room, chamber, or the like in that the first channel 11, the second channel 12, the third channel 13, and the fourth channel 14 may be distinguished from each other by the ion exchange membranes 11c and 12c.

The anion exchange membrane 11c, the first cation exchange membrane 12c, and the second cation exchange membrane 13c may include a membrane through which a fluid is passable.

The first channel 11, the second channel 12, and the third channel 13 may be fluidly connected to each other. For example, fluid in the third channel 13 may be movable to the first channel 11 and/or the second channel 12, and conversely, fluid in the first channel 11 and/or the second channel 12 may be movable to the third channel 13.

In contrast, the fourth channel 14 may not be fluidly connected to the first channel 11, the second channel 12, and the third channel 13 due to the second current collector 12a. For example, the water accommodated in the fourth channel 14 may flow to the first channel 11, the second channel 12, and the third channel 13 via a flow path 225 only.

The first cation exchange membrane 12c may include a membrane that allows only cations to pass through among cations and anions. The first cation exchange membrane 12c carries a negative charge, allowing only cations to pass through while repelling anions.

The second cation exchange membrane 13c may include a membrane that allows only cations to pass through among cations and anions. The second cation exchange membrane 13c carries a negative charge, allowing only cations to pass through while repelling anions.

The anion exchange membrane 11c may include a membrane that allows only anions to pass through among cations and anions. The anion exchange membrane 11c carries a positive charge, allowing only anions to pass through while repelling cations.

The ion exchange membranes 11c, 12c, and 13c may include synthetic resin membranes.

In response to applying a positive voltage to the first current collector 11a, the first electrode 11ab becomes a positive electrode (anode), and in response to applying a negative voltage to the second current collector 12a, the second electrode 12ab becomes a negative electrode (cathode). Accordingly, in response to applying a positive voltage to the first current collector 11a and applying a negative voltage to the second current collector 12a, the cations in the third channel 13 may move to the second channel 12, and the anions in the third channel 13 may move to the first channel 11.

Applying a positive voltage to the first current collector 11a and applying a negative voltage to the second current collector 12a may include applying a positive voltage between the first current collector 11a and the second current collector 12a.

Applying a positive voltage between the first current collector 11a and the second current collector 12a may include setting a potential of the first current collector 11a higher than a potential of the second current collector 12a.

In response to applying a negative voltage to the first current collector 11a, the first electrode 11ab becomes a negative electrode (cathode), and in response to applying a positive voltage to the second current collector 12a, the second electrode 12ab becomes a positive electrode (anode). Accordingly, in response to applying a negative voltage to the first current collector 11a and applying a positive voltage to the second current collector 12a, the cations in the second channel 12 may move to the third channel 13, and the anions in the first channel 11 may move to the third channel 13.

Applying a negative voltage to the first current collector 11a and applying a positive voltage to the second current collector 12a may include applying a negative voltage between the first current collector 11a and the second current collector 12a.

Applying a negative voltage between the first current collector 11a and the second current collector 12a may include setting a potential of the first current collector 11a lower than a potential of the second current collector 12a.

The first channel 11 may be provided with the first porous electrode 11b, and the second channel 12 may be provided with the second porous electrode 12b.

By applying a positive voltage between the first current collector 11a and the second current collector 12a, the anions moved to the first channel 11 may be adsorbed on the first porous electrode 11b, and the cations moved to the second channel 12 may be adsorbed on the second porous electrode 12b.

By applying a negative voltage between the first current collector 11a and the second current collector 12a, the anions adsorbed on the first porous electrode 11b may be desorbed from the first porous electrode 11b, and the cations adsorbed on the second porous electrode 12b may be desorbed from the second porous electrode 12b.

By applying a positive voltage to the third current collector 13a, the third current collector 13a becomes a positive electrode (anode), and by applying a negative voltage to the second current collector 12a, the second electrode 12ab becomes a negative electrode (cathode).

Applying a positive voltage to the third current collector 13a may include applying a negative voltage to the second current collector 12a.

Applying a positive voltage to the third current collector 13a and applying a negative voltage to the second current collector 12a may include applying a positive voltage between the third current collector 13a and the second current collector 12a.

Applying a positive voltage between the third current collector 13a and the second current collector 12a may include setting a potential of the third current collector 13a higher than a potential of the second current collector 12a.

In an embodiment, the housing 201 may include the first inlet 202 to allow water to be introduced into the third channel 13, and the first outlet 203 to allow water to be discharged from the third channel 13.

In an embodiment, the housing 201 may include the second inlet 204 to allow water to be introduced into the second channel 12.

In an embodiment, the housing 201 may include the third inlet 206 to allow water to be introduced into the fourth channel 14, and the second outlet 205 to allow water to be discharged from the fourth channel 14.

Through the first inlet 202, external water (water from the outside the CDI module 200) may be introduced into the third channel 13. Through the first inlet 202, water may be introduced into the third channel 13 from the circulation flow path 225 to be described later. Through the first outlet 203, water in the third channel 13 may be discharged to the outside of the CDI module 200.

Through the second inlet 204, water may be introduced into the second channel 12 from the circulation flow path 225.

Through the third inlet 206, water from the outside the CDI module 200 may be introduced into the fourth channel 14. Through the second outlet 205, water in the fourth channel 14 may be discharged to the circulation flow path 225.

The water treatment apparatus 2 may treat water supplied from a water source 15 where raw water is stored or supplied from an external source. The raw water may include water that is to be treated by the water treatment apparatus 2.

The water treatment apparatus 2 may include a pump 16 for pumping external water (e.g., water supplied from the water source).

The water treatment apparatus 2 may include the at least one flow path 220 and the at least one valve 230. The at least one flow path 220 may be branched by the at least one valve 230.

The water pumped by the pump 16 may flow into the flow paths 220 of the water treatment apparatus 2.

In an embodiment, external water may be pumped by the pump 16 and flow into a first flow path 221. The first flow path 221 may be configured to receive the external water.

A first valve 230a may allow water flowing on the first flow path 221 to flow into either a second flow path 222 or a third flow path 223. The second flow path 222 may include a flow path configured to allow water to flow from the first flow path 221 to the fourth channel 14. The third flow path 223 may include a flow path configured to allow water to flow from the first flow path 221 into the third channel 13.

The third flow path 223 may be connected to the first inlet 202. The second flow path 222 may be connected to the third inlet 206.

A second valve 230b may open or close the third flow path 223. The second valve 230b may block or allow water flow on the third flow path 223.

In an embodiment, the second valve 230b may be omitted in a case where the first valve 230a is capable of blocking the flow of water from the first flow path 221.

The water flowing into the third channel 13 through the third flow path 223 may be discharged to a fourth flow path 224. The fourth flow path 224 may be connected to the first outlet 203.

A fourth valve 230d may allow water flowing on the fourth flow path 224 to flow into either a first discharge flow path 226 or a second discharge flow path 227. For example, the fourth valve 230d may allow the water discharged from the third channel 13 to flow into either the first discharge flow path 226 or the second discharge flow path 227. In an embodiment, the fourth valve 230d may close the fourth flow path 224 to prevent the water flowing on the fourth flow path 224 from flowing into the first discharge flow path 226 and the second discharge flow path 227.

The first discharge flow path 226 may include a flow path through which purified water (or deionized water) is discharged. The second discharge flow path 227 may include a flow path through which contaminated water (or wastewater) is discharged.

The water flowing into the fourth channel 14 through the second flow path 222 may be discharged to the fifth flow path 225. The fifth flow path 225 may be connected to the second outlet 205. The fifth flow path 225 may be connected to the first inlet 202 and/or the second inlet 204. In other words, the fifth flow path 225 may include a flow path configured to allow water discharged from the fourth channel 14 to flow into the third channel 13 and/or the second channel 12. Accordingly, the fifth flow path 225 may be referred to as a circulation flow path 225.

A third valve 230c may open and close the fifth flow path 225.

According to an embodiment, the water treatment apparatus 2 includes the fifth flow path 225 allowing the water discharged from the fourth channel 14 to flow into the third channel 13 and/or the second channel 12, thereby cleaning the third channel 13 and/or the second channel 12 using acidic water generated in the fourth channel 14, which will be described later.

According to various embodiments, the number of inlets 202, 204 and 206, the number of outlets 203 and 205, the type of flow paths 220 and/or the type of at least one valve 230 are not limited to the example shown in FIG. 15. For example, the water treatment apparatus 2 may include two outlets connected to the third channel 13 and two valves for opening and closing the flow paths connected to the two outlets.

In another example, the water treatment apparatus 2 may include two inlets connected to the third channel 13, and the two inlets may be connected to the third flow path 223 and the fifth flow path 225, respectively.

In an embodiment, the water treatment apparatus 2 may include at least one CDI module 200.

A description of a control block diagram of the water treatment apparatus 2 is omitted to avoid duplication of the description made with reference to FIG. 2. In the water treatment apparatus 2, the CDI module 100 shown in FIG. 2 may be replaced by the CDI module 200 including the first electrode 11ab, the second electrode 12ab, and the third current collector 13a, and the at least one valve 30 may be replaced by the at least one valve 230.

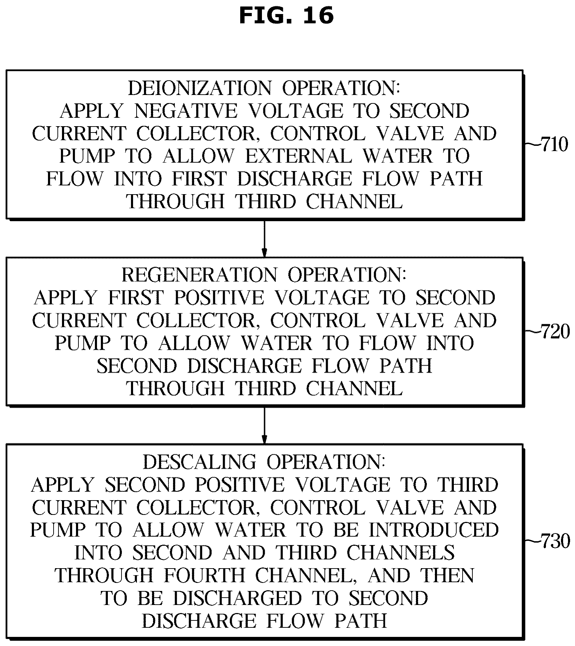

FIG. 16 is a flowchart illustrating an example of a method for controlling the water treatment apparatus shown in FIG. 15 according to an embodiment.

Referring to FIG. 16, the water treatment apparatus 2 according to an embodiment may perform a deionization operation, a regeneration operation, and/or a descaling operation.

In the deionization operation, the water treatment apparatus 2 may apply a negative voltage to the second current collector 12a (710). A related description is omitted herein to avoid duplication of the description of the operation 410 of FIG. 3.

In the deionization operation, the controller 70 may control the at least one valve 230 and/or the pump 16 to allow external water to flow into the first discharge flow path 226 through the third channel 13 (710). A related description is omitted herein to avoid duplication of the description of the operation 610 of FIG. 11.

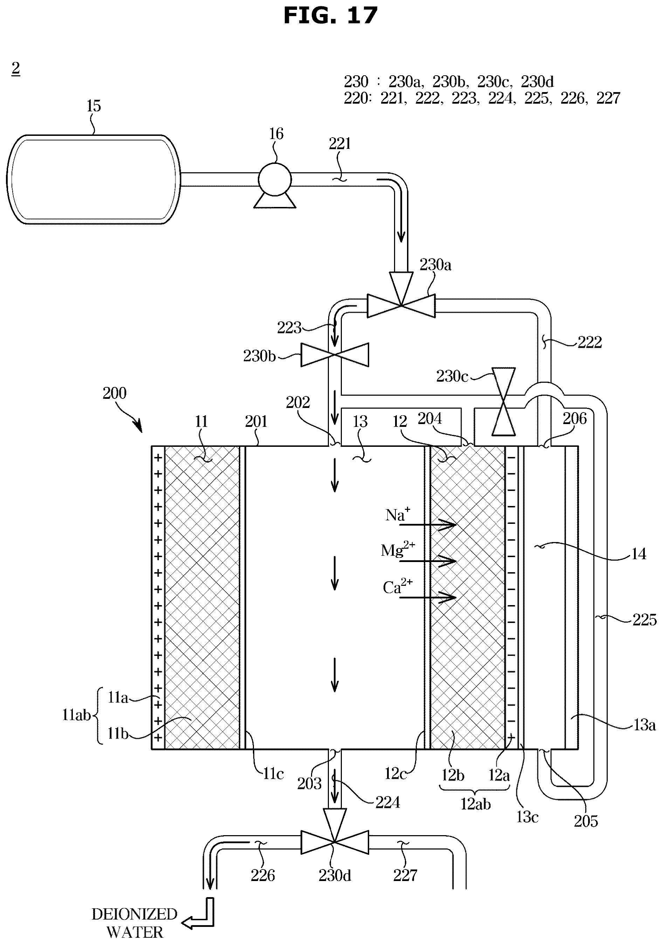

FIG. 17 illustrates an example of water flow during a deionization process of the water treatment apparatus shown in FIG. 15 according to an embodiment.

FIG. 17 illustrates that water introduced into the CDI module 200 from the outside passes through the third channel 13 and is discharged to the first discharge flow path 226. A related description is omitted herein to avoid duplication of the description of the water flow described in FIG. 12.

Referring again to FIG. 15, in the regeneration operation, the water treatment apparatus 2 may apply a first positive voltage to the second current collector 12a (720). A related description is omitted herein to avoid duplication of the description of the operation 420 of FIG. 3.

In the regeneration operation, the controller 70 may control the at least one valve 230 and/or the pump 16 to allow external water to flow into the second discharge flow path 227 through the third channel 13 (720). A related description is omitted herein to avoid duplication of the description of the operation 620 described in FIG. 11.

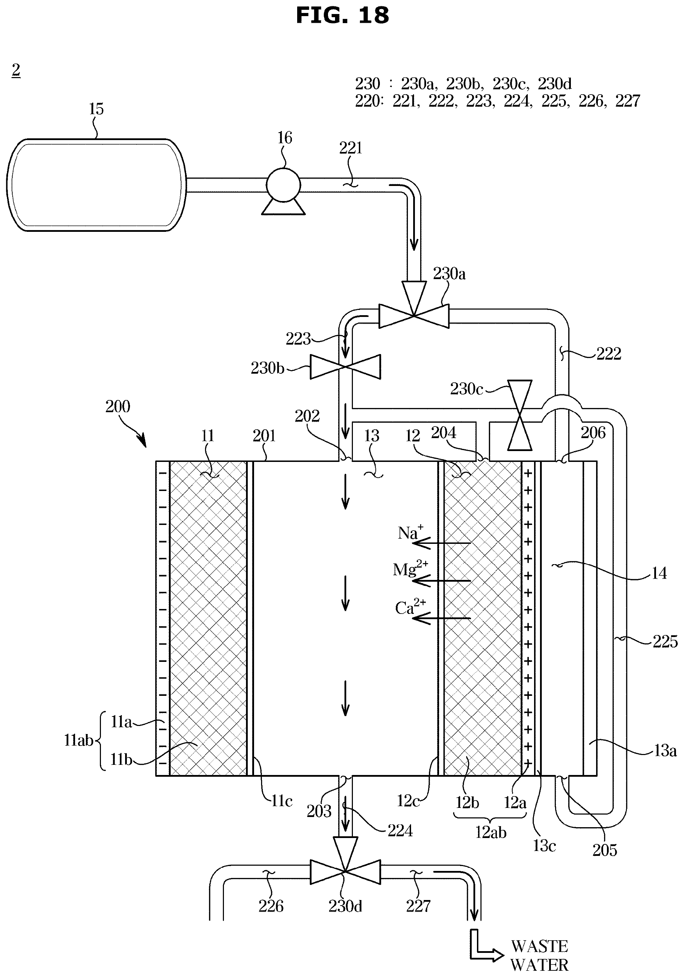

FIG. 18 illustrates an example of water flow during a regeneration operation of the water treatment apparatus shown in FIG. 15 according to an embodiment.

FIG. 18illustrates that water introduced into the CDI module 200 from the outside passes through the third channel 13 and is discharged to the second discharge flow path 227. A related description is omitted herein to avoid duplication of the description of the water flow in FIG. 13.

Referring again to FIG. 15, in the descaling operation, the water treatment apparatus 2 may apply a second positive voltage to the third current collector 13a (730).

A magnitude of the second positive voltage applied to the third current collector 13a in the descaling operation may be greater than a magnitude of the first positive voltage applied to the second current collector 12a in the regeneration operation.

The magnitude of the second positive voltage applied to the third current collector 13a in the descaling operation may be preset within a range that allows electrolysis of the water in the fourth channel 14.

The magnitude of the first positive voltage applied to the second current collector 12a in the regeneration operation may be less than or equal to 0.6 V, whereas the magnitude of the second positive voltage applied to the third current collector 13a in the descaling operation may be greater than 0.6 V.

For example, the controller 70 may apply the first positive voltage to the second current collector 12a in the regeneration operation, and may apply the second positive voltage greater than the first positive voltage in magnitude to the third current collector 13a in the descaling operation.

The controller 70 may apply the second positive voltage greater than the first positive voltage in magnitude to the third current collector 13a in the descaling operation, thereby causing the water in the fourth channel 14 to be electrolyzed.

In the descaling operation, acidic water generated in the fourth channel 14 may remove scale attached to the second porous electrode 12b and the cation exchange membrane 12c.

According to embodiments, the CDI module 100 may generate acidic water on its own, thereby removing scale in the CDI module 100 without user intervention or an additional device.

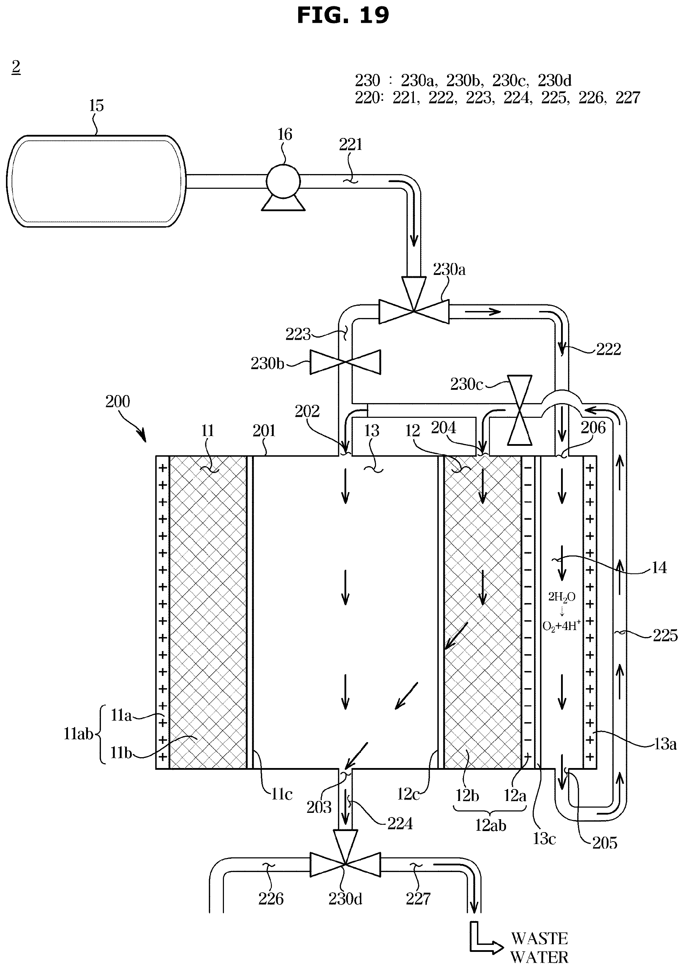

FIG. 19 illustrates an example of water flow during a descaling operation of the water treatment apparatus shown in FIG. 15 according to an embodiment.

FIG. 19illustrates that water introduced into the CDI module 200 from the outside passes through the fourth channel 14, and then flows into the third channel 13 and/or the second channel 12 through the first inlet 202 and/or the second inlet 204, and then the water in the third channel 13 and/or the second channel 12 is discharged to the second discharge flow path 227.

In an embodiment, in the descaling operation, the controller 70 may control the at least one valve 230 and/or the pump 16 to allow external water to be introduced into the third channel 13 and/or the second channel 12 through the fourth channel 14, and to allow the water in the third channel 13 and/or the second channel 12 to be discharged to the second discharge flow path 227 (730).

In an embodiment, in the descaling operation, the controller 70 may operate the pump 16 to cause external water to flow to the first flow path 221.

In the descaling operation, the controller 70 may control the first valve 30a to cause the water pumped into the first flow path 221 to flow into the second flow path 222.

The water flowing on the second flow path 222 may flow into the circulation flow path 225 through the fourth channel 14.

In the descaling operation, the controller 70 may open the third valve 30c to cause the water flowing on the circulation flow path 225 to flow into the third channel 13 through the first inlet 202.

In the descaling operation, the controller 70 may open the third valve 30c to cause the water flowing on the circulation flow path 225 to flow into the second channel 12 through the second inlet 204.

In the descaling operation, the controller 70 may control the fourth valve 230d to cause the water in the third channel 13 and/or the second channel 12 to flow into the second discharge flow path 227 through the first outlet 203.

According to embodiments, in the descaling operation, acidic water generated in the fourth channel 14 may flow into the third channel 13 and/or the second channel 12, thereby removing scale attached to the second electrode 12ab and/or one side of the cation exchange membrane 12c, and as the acidic water generated in the fourth channel 14 moves to the third channel 13 and/or the second channel 12, scale attached to the first electrode 11ab, the anion exchange membrane 11c, and/or the other side of the cation exchange membrane 12c may be removed.

In an embodiment, the controller 70 may operate the pump 16 based on the start of the descaling operation.

In an embodiment, the controller 70 may continuously operate the pump 16 during the descaling operation.

In an embodiment, in the descaling operation, the controller 70 may also operate the pump 16 after applying a second positive voltage to the third current collector 13a for a predetermined time.

For example, the predetermined time may be preset to be a period of time that allows pH of the water in the second channel 12 to fall below 4.

In an embodiment, in the descaling operation, the controller 70 may increase an operating RPM of the pump 16 for a predetermined time. In the descaling operation, the controller 70 may increase the operating RPM of the pump 16 to a maximum operating RPM for a predetermined time.

The controller 70 may control the maximum operating RPM of the pump 16 to a third target RPM in the descaling operation.

For example, the third target RPM may be preset to ensure sufficient mechanical cleaning force to remove the precipitated scale, while water flowing into the third channel 13 through the first inlet 202 flows to the fourth flow path 224, or while water flowing into the second channel 12 through the second inlet 204 flows to the fourth flow path 224.

The first target RPM, the maximum operating RPM of the pump 16 in the deionization operation, and/or the second target RPM, the maximum operating RPM of the pump 16 in the regeneration operation, may be less than the third target RPM which is the maximum operating RPM of the pump 16 in the descaling operation.

The controller 70 may control the maximum operating RPM of the pump 16 to a first RPM in the deionization operation and/or regeneration operation, and may control the maximum operating RPM of the pump 16 to a second RPM greater than the first RPM in the descaling operation.

The controller 70 may control the maximum operating RPM of the pump 16 to be equal to or less than the first RPM in the deionization operation and/or regeneration operation, and may control the maximum operating RPM of the pump 16 to the second RPM greater than the first RPM in the descaling operation.

According to embodiments, the controller 70 may increase the operating RPM of the pump 16 for a predetermined time in the descaling operation, thereby enhancing a physical cleaning force due to the increased flow rate.

In an embodiment, in the descaling operation, the controller 70 may repeat the process of applying a second positive voltage to the second current collector 12a for a predetermined time and then operating the pump 16 for a predetermined time a predetermined number of times.

According to various embodiments, the embodiments described with reference to FIG. 7 to FIG. 10 may also be applied to the water treatment apparatus 2.

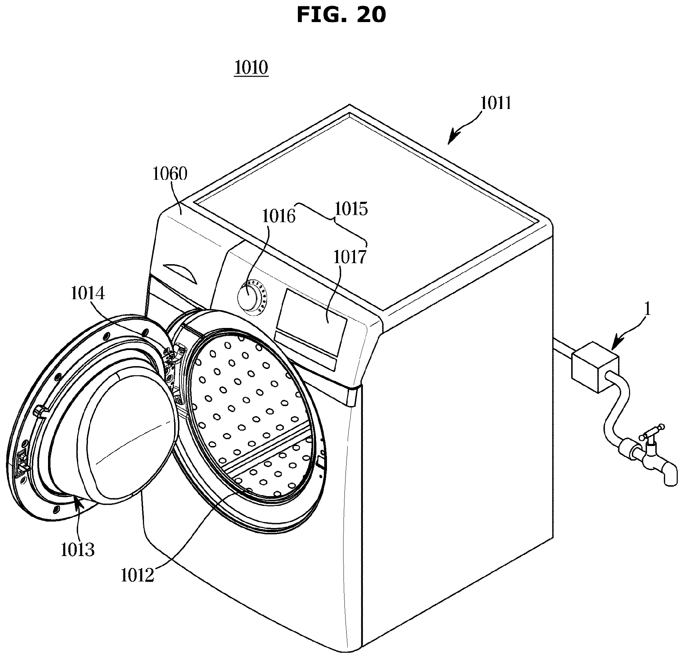

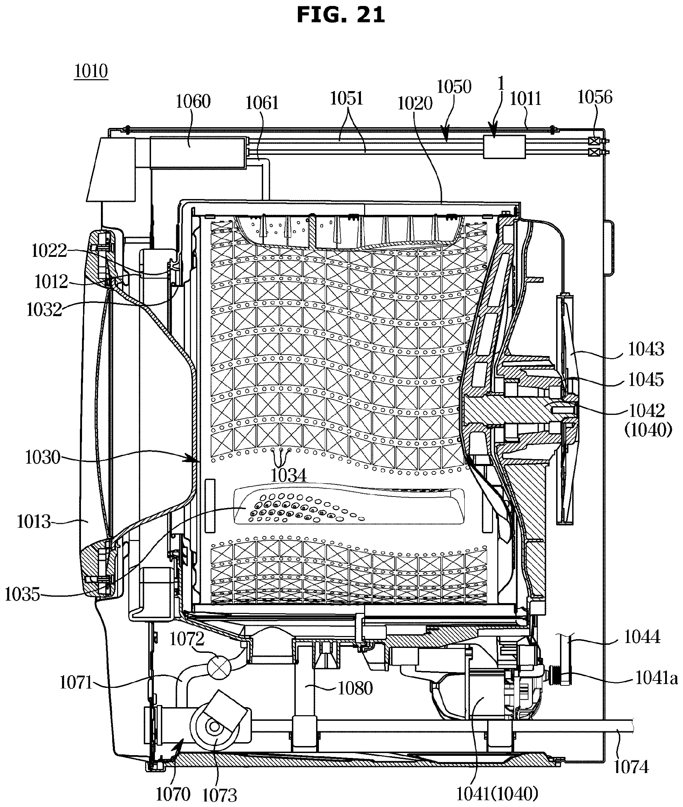

FIG. 20 illustrates a washing machine connected to a water treatment apparatus according to an embodiment of embodiments. FIG. 21 is a cross-sectional view of a washing machine to which a water treatment apparatus according to an embodiment of embodiments is applied.

Referring to FIG. 20 and FIG. 21, a washing machine 1010 to which the water treatment apparatus 1 and/or 2 according to an embodiment of embodiments is connected and/or applied is described.

The washing machine 1010 may include a washing machine housing 1011 accommodating various components therein. The washing machine housing 1011 may form an appearance of the washing machine 1010. The washing machine housing 1011 may have a box shape with one open side.

The washing machine housing 1011 may include a housing opening 1012 formed to allow access to the inside of a drum 1030. The housing opening 1012 may be open approximately forward.

The washing machine 1010 may include a door 1013 for opening and closing the hosing opening 1012 formed in the washing machine housing 1011. The door 1013 may be pivotally coupled to the washing machine housing 1011 by using a hinge 1014. At least a portion of the door 1013 may be transparent or translucent to allow the inside of the washing machine housing 1011 to be viewed.

The washing machine 1010 may include a tub 1020 provided in the washing machine housing 1011 to store water. The tub 1020 may be located in the washing machine housing 1011. The tub 1020 may include a tub opening 1022 provided to correspond to the housing opening 1012. The tub opening 1022 may be open approximately forward. The tub 1020 may be supported in the washing machine housing 1011. The tub 1020 may have an approximately cylindrical shape with one open side.

The tub 1020 may be elastically supported by the washing machine housing 1011 via a damper 1080. The damper 1080 may connect the washing machine housing 1011 with the tub 1020. The damper 1080 may absorb vibration energy between the tub 1020 and the washing machine housing 1011 while vibration generated during rotation of the drum 1030 is transmitted to the tub 1020 and/or the washing machine housing 1011, thereby attenuating the vibration transmitted thereto.

The washing machine 1010 may include a drum 1030 provided to contain laundry. The drum 1030 may be rotatable in the tub 1020. The drum 1030 may perform washing, rinsing, and/or spin-drying operations while rotating in the tub 1020. The drum 1030 may include through-holes 1034 connecting an interior space of the drum 1030 with an interior space of the tub 1020. The drum 1030 may have an approximately cylindrical shape with one open side. At least one lifter 1035 may be installed at an inner peripheral surface of the drum 1030 such that laundry is raised and dropped during rotation of the drum 1030.

The drum 1030 may include a drum opening 1032 provided to correspond to the housing opening 1012 and the tub opening 1022. The laundry may be introduced into the drum 1030 and withdrawn from the drum 1030 through the housing opening 1012, the tub opening 1022, and the drum opening 1032.

The washing machine 1010 may include a washing machine drive device 1040 rotating the drum 1030. The washing machine drive device 1040 may include a drive motor 1041, and a rotary shaft 1042 transmitting a driving force generated by the drive motor 1041 to the drum 1030. The rotary shaft 1042 may pass through the tub 1020 to be connected to the drum 1030.

The washing machine 1010 may be classified into a direct driving type in which the rotary shaft 1042 is directly connected to the drive motor 1041 to rotate the drum 1030, and an indirect driving type in which the rotary shaft 1042 is connected to the drive motor 1041 via a pulley 1043 to rotate the drum 1030.

The washing machine 1010 according to an embodiment may be provided as the indirect driving type, but is not limited thereto, and may also be provided as the direct driving type.

One end of the rotary shaft 1042 may be connected to the drum 1030, and the other end of the rotary shaft 1042 may be connected to the pulley 1043 to receive a drive power from the drive motor 1041. A motor pulley 1041a may be provided at a rotation shaft of the drive motor 1041. A drive belt 1044 may be provided between the motor pulley 1041a and the pulley 1043, and the rotary shaft 1042 may be driven by the drive belt 1044.

A bearing housing 1045 for rotatably supporting the rotary shaft 1042 may be installed at a rear region of the tub 1020. The bearing housing 1045 may be formed of an aluminum alloy, and may be inserted into the rear region of the tub 1020 while the tub 1020 is injection molded.

The washing machine drive device 1040 may be provided to perform the washing, rinsing, and/or spin-drying, or drying operation by rotating the drum 1030 in the forward direction and the reverse direction.

The washing machine 1010 may include a water supply device 1050. The water supply device 1050 may supply water to the tub 1020. The water supply device 1050 may be disposed above the tub 1020. The water supply device 1050 may include a water supply pipe 1051, and a water supply valve 1056 provided at the water supply pipe 1051. The water supply pipe 1051 may be connected to an external water source. The water supply pipe 1051 may extend from an external water source to a detergent supply device 1060 and/or the tub 1020. Water may be supplied to the tub 1020 via the detergent supply device 1060. Water may be supplied to the tub 1020 without passing through the detergent supply device 1060.

The water supply valve 1056 may open or close the water supply pipe 1051 in response to an electrical signal of the controller. The water supply valve 1056 may allow or block the supply of water from the external water source to the tub 1020. The water supply valve 1056 may include, for example, a solenoid valve open and closed in response to an electrical signal.

The washing machine 1010 may include the detergent supply device 1060 supplying a detergent to the tub 1020. The detergent supply device 1060 may supply a detergent into the tub 1020 during a water supply cycle. Water supplied through the water supply pipe 1051 may pass through the detergent supply device 1060 to be mixed with the detergent. Water mixed with the detergent may be supplied into the tub 1020. The detergent may include not only laundry detergents but also rinses, deodorizers, disinfectants, or fragrances for a dryer. The detergent supply device 1060 may be connected to the tub 1020 via a connection pipe 1061.

The washing machine 1010 may include a drain device 1070. The drain device 1070 may discharge water contained in the tub 1020 to the outside. The drain device 1070 may include a drain pump 1073 for discharging water of the tub 1020 out of the washing machine housing 1011, a connection hose 1071 connecting the tub 1020 with the drain pump 1073 to allow water contained in the tub 1020 to be introduced into the drain pump 1073, and a drain hose 1074 for guiding the water pumped by the drain pump 1073 out of the washing machine housing 1011. The drain device 1070 may include a drain valve 1072 provided at the connection hose 1071 to open and close the connection hose 1071.

The washing machine 1010 may provide a user interface device 1015 for interaction between a user and the washing machine 1010.

The washing machine 1010 may include at least one user interface device 1015. The user interface device 1015 may include at least one input interface 1016 and at least one output interface 1017.

The at least one input interface 1016 may convert sensory information received from the user into an electrical signal.

The at least one input interface 1016 may include a power button, an operation button, a course select dial (or course select button), and a washing/rinsing/spin-drying setting button. The at least one input interface 1016 may include, for example, a tact switch, a push switch, a slide switch, a toggle switch, a micro switch, a touch switch, a touch pad, a touch screen, a jog dial, and/or a microphone.

The at least one output interface 1017 may transmit various data related an operation of the washing machine 1010 to the user by generating sensory information.

For example, the at least one output interface 1017 may transmit information related to the washing course, an operation time of the washing machine 1010, and washing setting/rinsing setting/spin-drying setting-related information to the user. The information related to the operation of the washing machine 1010 may be output through a screen, indicator, voice, or the like. The at least one output interface 1017 may include, for example, a liquid crystal display (LCD) panel, a light emitting diode (LED) panel, a speaker, and the like.

The water treatment apparatus 1 and/or 2 according to various embodiments may be provided to remove ions from water supplied to the washing machine 1010.

For example, the water treatment apparatus 1 and/or 2 may be disposed outside the washing machine 1010, as shown in FIG. 20. The water treatment apparatus 1 and/or 2 may be disposed outside the washing machine 1010 and may remove ions from water supplied to the washing machine 1010. The water treatment apparatus 1 and/or 2 may be provided at a flow path connecting an external water source and the washing machine 1010.

For example, the water treatment apparatus 1 and/or 2 may be disposed inside the washing machine 1010, as shown in FIG. 21. The water treatment apparatus 1 and/or 2 may be connected to the water supply pipe 1051. For example, the first flow path 21 of the CDI module 100 may be connected to the water supply pipe 1051. The water treatment apparatus 1 and/or 2 may remove ions from water flowing through the water supply pipe 1051. A position of the water treatment apparatus 1 and/or 2 is not limited to the water supply pipe 1051, and the water treatment apparatus 1 and/or 2 may be provided at various positions where water supplied to the washing machine 1010 pass.

The water treatment apparatus 1 and/or 2 according to various embodiments may be disposed outside and/or inside the washing machine 1010.

The water treatment apparatus 1 and/or 2 may perform a deionization operation during a water supply cycle of the washing machine 1010. In an embodiment, the washing machine 1010 may transmit a water supply initiation signal to the water treatment apparatus 1 and/or 2 based on a condition for starting the water supply cycle being satisfied. The water treatment apparatus 1 and/or 2 may proceed with the deionization operation in response to receiving the water supply initiation signal from the washing machine 1010.

The water treatment apparatus 1 and/or 2 may perform a regeneration operation based on termination of the water supply cycle of the washing machine 1010. In an embodiment, the washing machine 1010 may transmit a water supply termination signal to the water treatment apparatus 1 and/or 2 based on a condition for terminating the water supply cycle being satisfied. The water treatment apparatus 1 and/or 2 may proceed with the regeneration operation in response to receiving the water supply termination signal from the washing machine 1010.

Based on a condition for a descaling operation being satisfied, the water treatment apparatus 1 and/or 2 may perform the descaling operation while the washing machine 1010 does not perform the water supply cycle.

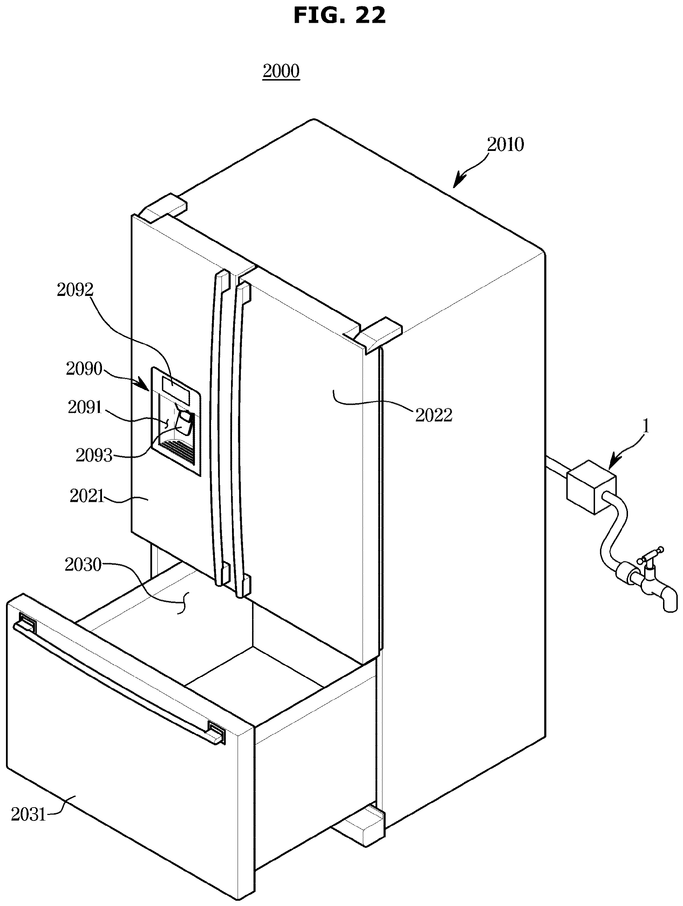

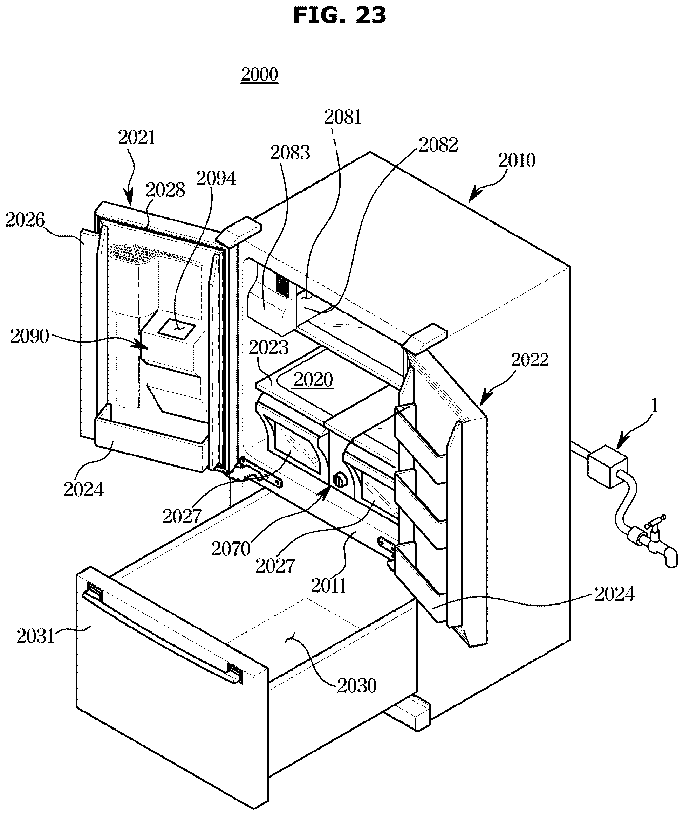

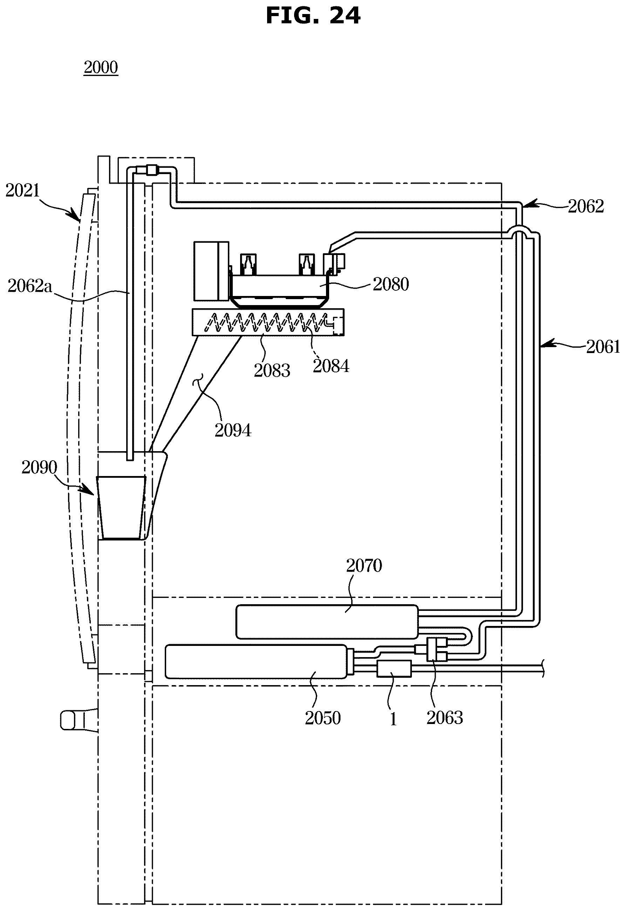

FIG. 22 illustrates a refrigerator connected to a water treatment apparatus according to an embodiment of embodiments. FIG. 23 illustrates a state where a door of a refrigerator connected to a water treatment apparatus according to an embodiment of embodiments is open. FIG. 24 is a cross-sectional view of a refrigerator to which a water treatment apparatus according to an embodiment of embodiments is applied

Referring to FIGS. 22 to 24, a refrigerator 2000 to which the water treatment apparatus 1 and/or 2 according to an embodiment of embodiments is connected and/or applied is described.

The refrigerator 2000 according to an embodiment may include a main body 2010.

The main body 2010 may include an inner cabinet, an outer cabinet located outside the inner cabinet, and an insulation material disposed between the inner cabinet and the outer cabinet.

The inner cabinet may include at least one of a case, a plate, a panel, or a liner constituting storage compartments 2020 and 2030. The inner cabinet may be formed as one body or as an assembly of a plurality of plates. The outer cabinet may form an appearance of a main body and may be coupled to outer sides of the inner cabinet to allow the insulation material to be disposed between the inner cabinet and the outer cabinet.

The insulation material may insulate the inside of the storage compartments 2020 and 2030 and the outside of the storage compartments 2020 and 2030 to maintain the temperature inside the storage compartments 2020 and 2030 at a previously set appropriate temperature without being affected by an external environment. According to an embodiment, the insulation material may include a foam insulation material. The foam insulation material may be formed by injecting and blowing urethane foam including polyurethane and a blowing agent into space between the inner cabinet and the outer cabinet.

According to an embodiment, the insulation material may further include a vacuum insulation material in addition to the foam insulation material, or the insulation material may be formed of only the vacuum insulation material instead of the foam insulation material. The vacuum insulation material may include a core material and an outer shell material that accommodates the core material and seals the interior with a vacuum or a near-vacuum pressure. However, the insulation material is not limited to the above-described foam insulation material or vacuum insulation material, and may include various other materials available for insulation.

The storage compartments 2020 and 2030 may include a space limited by the inner cabinet. The storage compartments 2020 and 2030 may further include an inner cabinet defining a space corresponding to the storage compartments 2020 and 2030. The storage compartments 2020 and 2030 may store various items such as food, medicine, and cosmetics, and may be formed to have one open side for loading and unloading the items.

The refrigerator 2000 may include one or more storage compartments 2020 and 2030. In the case where the refrigerator 2000 includes two or more storage compartments 2020 and 2030, each of the storage compartments 2020 and 2030 may have different uses and be maintained at different temperatures. To this end, each of the storage compartments 2020 and 2030 may be partitioned by a barrier wall 2011 including an insulation material.

The storage compartments 2020 and 2030 may be provided at an appropriate temperature range according to the use thereof, and may include a refrigerator compartment, a freezer compartment, or a temperature-viable compartment classified according to the use and/or temperature range. The refrigerator compartment may be maintained at a temperature appropriate for storing items under refrigeration, and the freezer compartment may be maintained at a temperature appropriate for storing items in a frozen state. Refrigeration may refer to keeping items in a chilled state without being frozen, and for example, the refrigerator compartment may be maintained in a temperature range of 0 degrees Celsius to 7 degrees Celsius. Freezing may refer to cooling items to be frozen or to be kept in a frozen state, and for example, the freezer compartment may be maintained in a temperature range of -20 degrees Celsius to -1 degrees Celsius. The temperature-variable compartment may be used as either the refrigerator compartment or the freezer compartment according to a user selection, or regardless of the user selection.

The storage compartments 2020 and 2030 may also be referred to by various names such as vegetable compartment, fresh compartment, cooling compartment, and ice-making compartment in addition to the refrigerator compartment, the freezer compartment, and the temperature-variable compartment. The terms such as the refrigerator compartment, the freezer compartment, and the temperature-variable compartment used hereinafter are to be understood as encompassing the storage compartments 2020 and 2030 each having corresponding uses and temperature ranges.

The storage compartments 2020 and 2030 may include shelves 2023 to place food thereon, and at least one storage box 2027 to store food in a sealed state.

According to an embodiment, the refrigerator 2000 may include one or more doors 2021 and 2022, and 2031 for opening and closing one open side of the storage compartments 2020 and 2030. The doors 2021, 2022, and 2031 may be provided to open and close each of the one or more storage compartments 2020 and 2030, or one of the doors 2021, 2022, and 2031 may be provided to open and close the plurality of storage compartments 2020 and 2030. The doors 2021, 2022, and 2031 may be rotatably or slidably installed on the front of the main body 2010.

The doors 2021, 2022, and 2031 may be configured to seal the storage compartments 2020 and 2030 while the doors 2021, 2022, and 2031 are closed. The doors 2021, 2022, and 2031, like the main body 2010, may include an insulation material to insulate the storage compartments 2020 and 2030 while the doors 2021, 2022, and 2031 are closed.

According to an embodiment, the doors 2021, 2022, and 2031 may include a door exterior plate constituting the front of the doors 2021, 2022, and 2031, a door interior plate constituting the rear of the doors 2021, 2022, and 2031 and facing the storage compartments 2020 and 2030, an upper cap, a lower cap, and a door insulation material provided thereinside.

A gasket 2028 may be provided on a rim of the door interior plate to be in close contact with the main body 2010, thereby sealing the storage compartments 2020 and 2030 while the doors 2021, 2022, and 2031 are closed. The door interior plate may include a dyke 2025 protruding backward to allow a door basket 2024 for storing items to be mounted thereto.

According to an embodiment, in a case where one storage compartment 2020 is open and closed by two doors 2021 and 2022, the refrigerator 2000 may include a rotary bar 2026 to control cooling air of the storage compartment 2020 by sealing a gap between the two doors 2021 and 2022.

According to an embodiment, the doors 2021, 2022, and 2031 may include a door body, and a front panel detachably coupled to the front of the door body and constituting the front of the door. The door body may include a door exterior plate constituting the front of the door body, a door interior plate defining the rear of the door body and facing the storage compartment, an upper cap, a lower cap, and a door insulation material provided thereinside.

The refrigerator 2000 may be classified into French door type, side-by-side type, bottom-mounted freezer (BMF), top-mounted freezer (TMF), or one door refrigerator according to arrangement of the doors 2021, 2022, and 2031 and the storage compartments 2020 and 2030.

According to an embodiment, the refrigerator 2000 may include a cooling air supply device for supplying cooling air to the storage compartments 2020 and 2030.

The cooling air supply device may include a machine, an instrument, an electronic device, and/or a combined system thereof configured to cool the storage compartments 2020 and 2030 by generating and guiding cooling air.

According to an embodiment, the cooling air supply device may generate cooling air via a refrigeration cycle including compression, condensation, expansion, and evaporation processes of a refrigerant. To this end, the cooling air supply device may include a refrigeration cycle device including a compressor, a condenser, an expansion device, and an evaporator capable of driving the refrigeration cycle. According to an embodiment, the cooling air supply device may include a semiconductor such as a thermoelectric element. The thermoelectric element may cool the storage compartments 2020 and 2030 by heating and cooling operations by the Peltier effect.

According to an embodiment, the refrigerator 2000 may include a machine room in which at least some parts of the cooling air supply device are located.

The machine room may be arranged to be separated and insulated from the storage compartments 2020 and 2030 to prevent heat generated by the parts arranged in the machine room from being transferred to the storage compartments 2020 and 2030. The inside of the machine room may be configured to communicate with the outside of the main body 2010 to dissipate heat from the parts arranged in the machine room.

According to an embodiment, the refrigerator 2000 may include a dispenser 2090 provided at one or more doors 2021 to provide water and/or ice. The dispenser 2090 may be provided at the door 2021 to allow a user to approach thereto without opening the door 2021.

The dispenser 2090 may include a water-taking space 2091 where a container is mounted to take water or ice, and an operating lever configured to operate the dispenser 2090 to discharge water or ice.

According to an embodiment, the refrigerator 2000 may include an ice maker 2080 provided to generate ice. The ice maker 2080 may include an ice-making tray to store water, an ice-releasing device configured to release ice from the ice-making tray, and an ice bucket 2083 to store ice made in the ice-making tray.

The ice maker 2080 may be located in an ice-making chamber 2081 located at an upper corner of the storage compartment 2020. The ice-making chamber 2081 may be provided to be separated from the storage compartment 2020 by an ice-making chamber wall 2082. The ice-making chamber 2081 may be provided with an auger 2084 for transferring ice stored in the ice bucket 2083 to a chute 2094.

According to an embodiment, the refrigerator 2000 may include a water tank 2070 to store water. The water tank 2070 may be connected to an external water source. The water tank 2070 may store water purified by a water purifying filter 2050. A valve 2063 may be provided at a water supply line connecting the external water source with the water tank 2070.

According to an embodiment, the refrigerator 2000 may include a water supply flow path 2061 for ice making to supply water to the ice maker 2080, and a water supply flow path 2062 for the dispenser to supply water to the dispenser 2090.

According to an embodiment, the refrigerator 2000 may include a controller (not shown) for controlling the refrigerator 2000.

The controller may process a user input of the user interface 2092, and may control an operation of the user interface 2092. The user interface 2092 may be provided by using an input interface and an output interface. The controller may receive a user input from the user interface 2092. In addition, the controller may transmit a display control signal to display an image on the user interface 2092 and image data to the user interface 2092 in response to the user input.

The input interface may include a key, a touch screen, a microphone, and the like. The input interface may receive the user input and transmit the user input to a processor.

The output interface may include a display, a speaker, and the like. The output interface may output various notifications, messages, information, and the like produced by the processor.

The water treatment apparatus 1 and/or 2 according to various embodiments may remove ions from water supplied to the refrigerator 2000.

The water treatment apparatus 1 and/or 2 according to various embodiments may be disposed outside and/or inside the refrigerator 2000.

For example, the water treatment apparatus 1 and/or 2 may be disposed outside the refrigerator 2000, as shown in FIG. 22 and FIG. 23. The water treatment apparatus 1 and/or 2 may be disposed outside the refrigerator 2000, and may remove ions from water supplied to the refrigerator 2000. The water treatment apparatus 1 and/or 2 may be disposed at a flow path connecting the external water source with the refrigerator 2000.

For example, the water treatment apparatus 1 and/or 2 may be disposed inside the refrigerator 2000, as shown in FIG. 24. The water treatment apparatus 1 and/or 2 may be connected to a water supply line. For example, the first flow path 21 of the CDI module 100 may be connected to the water supply line. The water treatment apparatus 1 and/or 2 may remove ions from water flowing through the water supply line. A position of the water treatment apparatus 1 and/or 2 is not limited to the water supply line, and the water treatment apparatus 1 and/or 2 may be located at various positions where water supplied to the refrigerator 2000 may pass.

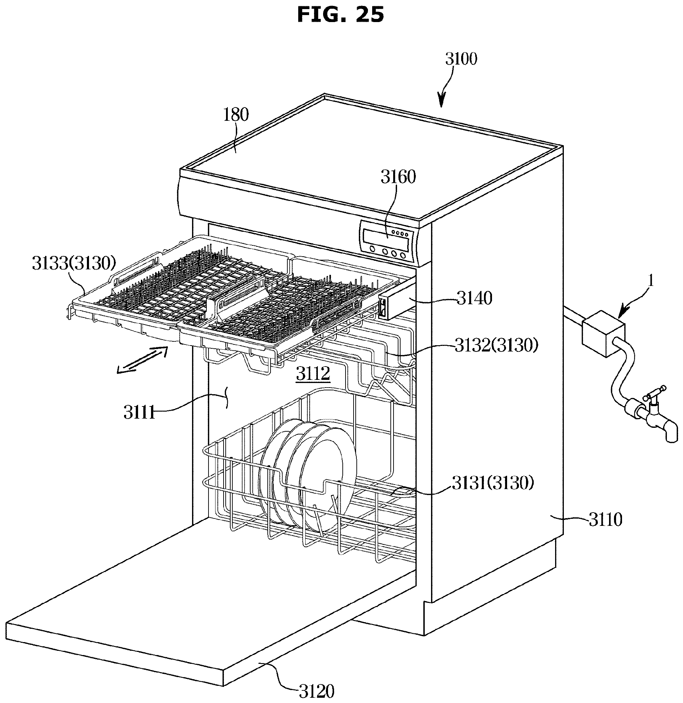

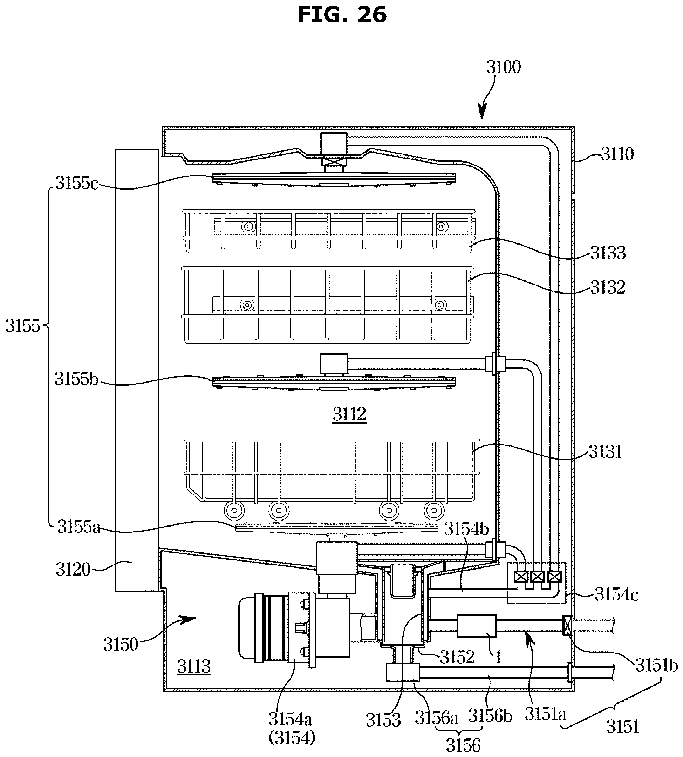

FIG. 25 illustrates a dishwasher connected to a water treatment apparatus according to an embodiment of embodiments. FIG. 26 is a cross-sectional view of a dishwasher to which a water treatment apparatus according to an embodiment of embodiments is applied.

Referring to FIG. 25 and FIG. 26, a dishwasher 3100 to which the water treatment apparatus 1 and/or 2 according to an embodiment of embodiments is connected and/or applied is described.

The dishwasher 3100 may include a main body 3110, a door 3120, an accommodating structure 3130, a sliding member 3140, a washing assembly 3150, and a user interface 3160.

The main body 3110 may form an appearance of the dishwasher 3100. The main body 3110 may include an opening 3111 at one side, and a washing tub 3112 open and closed by the door 3120 and a machine room 3113 spatially separated from the washing tub 3112 may be located therein.

The door 3120 may be pivotally coupled to the main body 3110 to open and close the opening 3111 of the main body 3110. The door 3120 may be coupled to a lower region of the main body 3110 by hinges. A handle or a groove for the handle may be formed at the outer side of the door 3120 to allow a user to manually open the door 3120.

The accommodating structure 3130 is located to be spaced apart from the washing tub 3112, is slidable forward and backward, has holes with various sizes, and includes first and second baskets 3131 and 3132 and a cutlery 3133 to accommodate dishes and the like.

Here, the first basket 3131 accommodates various tableware to be washed such as dishes, plates, and cookware, the second basket 3132 accommodates cups, and the like, and the cutlery 3133 accommodates forks, table knives, spoons, chopsticks, knives, ladles, and like.

The sliding member 3140 may be provided in the washing tub 3112 to guide and slide movement of each of the first and second baskets 3131 and 3132 and the cutlery 3133.

The washing assembly 3150 may be provided in the machine room 3113 and the washing tub 3112, and may include a water supply device 3151, a sump 3152, a heater 3153, a circulator 3154, a nozzle assembly 3155, and a drain device 3156 configured to perform a washing cycle, a rinsing cycle, a drying cycle, and the like.

The water supply device 3151 may include a water supply pipe 3151a located between the external water source and the sump 3152 and guiding water introduced from the outside to the sump 3152, and a water supply valve 3151b blocking water introduced from the outside.

The sump 3152 may store water introduced through the water supply pipe 3151a. The water dissolves a detergent to become wash water, and the wash water circulates the washing tub 3112, the sump 3152, the circulator 3154, and the nozzle assembly 3155.

The heater 3153 may be located around the sump 3152 and heat the wash water contained in the sump 3152.

Also, the sump 3152 may further be provided with a temperature detector (not shown) to detect a temperature of water.

The circulator 3154 may be provided between the sump 3152 and the nozzle assembly 3155, and may pump the wash water contained in the sump 3152 to supply the wash water to the nozzle assembly 3155 via a circulation pipe 3154b.

The circulator 3154 may include a circulation pump 3154a to pump the wash water contained in the sump 3152, a plurality of circulation pipes 3154b to guide the pumped wash water to the nozzle assembly 3155, and a valve 3154c provided at each circulation pipe 3154b to control circulation of the pumped wash water.

The nozzle assembly 3155 may spray the wash water supplied by the circulator 3154 to various tableware placed in the first and second basket 3131 and 3132 and the cutlery 3133.

The nozzle assembly 3155 may include a first nozzle 3155a arranged below the first basket 3131, a second nozzle 3155b arranged between the first basket 3131 and the second basket 3132, and a third nozzle 3155c arranged above the cutlery 3133. The first, second, and third nozzles 3155a, 3155b, and 3155c may be rotated by a rotor.

The drain device 3156 may discharge the wash water contained in the sump 3152 to the outside.

The drain device 3156 may include a drain pump 3156a to pump the wash water contained in the sump 3152 and a drain pipe 3156b to guide the pumped wash water to the outside. In addition, the drain device 3156 may further include a drain valve (not shown) to control external discharging of the wash water contained in the sump 3152 to the outside.

The user interface 3160 may be provided at the main body 3110 and manipulate and display operation information of the dishwasher.

The user interface 3160 may receive operation information such as various washing courses (e.g., standard course and manual course) and additional rinsing by an instruction of the user, display information about the ongoing operation, and the like, and display error information in the event of occurrence of an error.

Here, the washing course may include a washing cycle to wash tableware by spraying the wash water to the tableware, a rinsing cycle to rinse the tableware by spraying ringing water to the tableware, and a drying cycle to dry the rinsed tableware.

The water treatment apparatus 1 and/or 2 according to various embodiments may be provided to remove ions from the water supplied to the dishwasher 3100.

The water treatment apparatus 1 and/or 2 according to various embodiments may be disposed outside and/or inside the dishwasher 3100.

For example, the water treatment apparatus 1 and/or 2 may be disposed outside the dishwasher 3100, as shown in FIG. 25. The water treatment apparatus 1 and/or 2 may be disposed outside the dishwasher 3100, and may remove ions from water supplied to the dishwasher 3100. The water treatment apparatus 1 and/or 2 may be provided at a flow path connecting an external water source with the dishwasher 3100.

For example, the water treatment apparatus 1 and/or 2 may be disposed inside the dishwasher 3100, as shown in FIG. 26. The water treatment apparatus 1 and/or 2 may be connected to the water supply pipe 3151a. For example, the first flow path 21 of the CDI module 100 may be connected to the water supply pipe 3151a. The water treatment apparatus 1 and/or 2 may remove ions from water flowing through the water supply pipe 3151a. A position of the water treatment apparatus 1 and/or 2 is not limited to the water supply pipe 3151a, and the water treatment apparatus 1 and/or 2 may be located at various positions where water supplied to the dishwasher 3100 may pass.

The water treatment apparatus 1 and/or 2 may perform a deionization operation during a water supply cycle of the dishwasher 3100. The water supply cycle of the dishwasher 3100 may include a washing cycle and a rinsing cycle.

In an embodiment, the dishwasher 3100 may transmit a water supply initiation signal to the water treatment apparatus 1 and/or 2 based on a condition for starting the water supply cycle being satisfied. The water treatment apparatus 1 and/or 2 may perform the deionization operation in response to receiving the water supply initiation signal from the dishwasher 3100.

The water treatment apparatus 1 and/or 2 may perform a regeneration operation based on termination of the water supply cycle of the dishwasher 3100. In an embodiment, the dishwasher 3100 may transmit a water supply termination signal to the water treatment apparatus 1 and/or 2 based on a condition for terminating the water supply cycle being satisfied. The water treatment apparatus 1 and/or 2 may perform the regeneration operation in response to receiving the water supply termination signal from the dishwasher 3100.

Based on a condition for a descaling operation being satisfied, the water treatment apparatus 1 and/or 2 may perform the descaling operation while the dishwasher 3100 does not perform the water supply cycle.

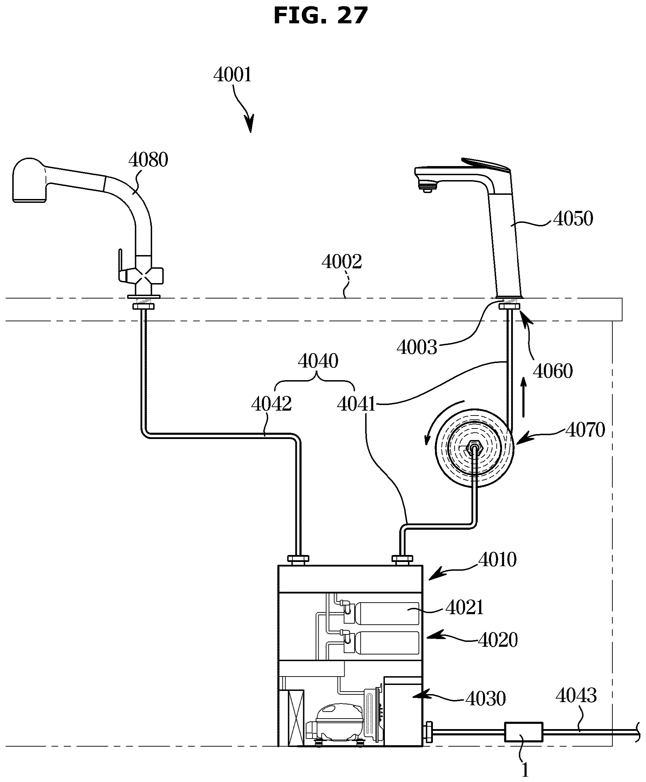

FIG. 27 illustrates a water purifier to which a water treatment apparatus according to an embodiment of embodiments is applied.

Referring to FIG. 27, a water purifier 4001 according to an embodiment of embodiments is described. The water purifier 4001 shown in FIG. 27 may include the water treatment apparatus 1 and/or 2.

Referring to FIG. 27, the water purifier 4001 may include a filtering body 4010, and a dispenser 4050 connected to the filtering body 4010 and configured to dispense a liquid from the filtering body 4010. The filtering body 4010 may be disposed under a kitchen worktop 4002, and the dispenser 4050 may be disposed on the kitchen worktop 4002. The kitchen worktop 4002 may include a sink. The sink may include a sink bowl and a kitchen countertop.

The dispenser 4050 may be rotatably provided at the top of the kitchen worktop 4002. For example, the dispenser 4050 may be rotatably installed at the top of the sink. The dispenser 4050 may be connected to the filtering body 4010 via a connection pipe 4040.

The filtering body 4010 may be disposed inside the kitchen worktop 4002. The filtering body 4010 may include a filter unit 4020 including at least one filter 4021, and a heat exchanger 4030 provided to cool or heat a liquid purified by the filter unit 4020. The heat exchanger 4030 may include a cooler and a heater.

The filtering body 4010 may receive raw water such as tap water via an external pipe 4043.

The connection pipe 4040 of the filtering body 4010 may include a first pipe 4041 connecting the filtering body 4010 to the dispenser 4050 and a second pipe 4042 connecting the filtering body 4010 to a faucet 4080 installed at the kitchen worktop 4002.

The kitchen worktop 4002 may be provided with an installation member 4003 for installing the dispenser 4050. The installation member 4003 may be formed by opening at least a portion of the kitchen worktop 4002. The dispenser 4050 may be connected to the first pipe 4041 via the installation member 4003 of the kitchen worktop 4002.

The dispenser 4050 may be rotatably installed at the installation member 4003. The water purifier 4001 may include a rotating member 4060 to rotatably install the dispenser 4050 to the installation member 4003. The rotating member 4060 may be coupled to the kitchen worktop 4002.

The water purifier 4001 may include a pipe-fixing member 4070 provided to fix the pipes 4041 and 4042. The pipe-fixing member 4070 may be located inside the kitchen worktop 4002. The pipe-fixing member 4070 may be disposed between the filtering body 4010 and the dispenser 4050. The pipe-fixing member 4070 may be fixed to at least one of the filtering body 4010 or the kitchen worktop 4002. On the pipe-fixing member 4070, parts of the pipes 4041 and 4042 may be wound. As the parts of the pipes 4041 and 4042 are wound or unwound on the pipe-fixing member 4070, lengths of the pipes 4041 and 4042 may be increased or decreased.

The water purifier 4001 according to an embodiment may include the water treatment apparatus 1 and/or 2. The water treatment apparatus 1 and/or 2 may be connected to the external pipe 4043. For example, the first flow path 21 of the CDI module 100 may be connected to the external pipe 4043. The water treatment apparatus 1 and/or 2 may remove ions from water flowing through the external pipe 4043. A position of the water treatment apparatus 1 and/or 2 is not limited to the external pipe 4043, and the water treatment apparatus 1 and/or 2 may be located at various positions where water supplied to the water purifier 4001 may pass.

According to embodiments, the water treatment apparatus 1 and/or 2 may be applied to a variety of products.

According to an embodiment of embodiments, a water treatment apparatus 1 may include: a first channel 11 formed by a first current collector 11a and an anion exchange membrane 11c; a second channel 12 formed by a second current collector 12a and a cation exchange membrane 12c; a third channel 13 formed by the anion exchange membrane 11c and the cation exchange membrane 12c; and a controller 70 configured to: in a deionization operation, cause cations contained in water in the third channel 13 to move to the second channel 12 by applying a negative voltage to the second current collector 12a, in a regeneration operation, cause cations in the second channel 12 to move to the third channel 13 by applying a first positive voltage to the second current collector 12a, and in a descaling operation, cause water in the second channel 12 to be electrolyzed by applying a second positive voltage greater than the first positive voltage in magnitude to the second current collector 12a.

The second current collector 12a may be selected from a group consisting of a transition metal, a transition metal oxide, a transition metal alloy, aluminum, an aluminum oxide, graphene, a dimensionally stable anode (DSA), and a boron doped diamond (BDD) electrode.

The water treatment apparatus 1 may further include a porous electrode 12b electrically connected to the second current collector 12a, and a spacer sc configured to secure a space between the porous electrode 12b and the cation exchange membrane 12c.

The water treatment apparatus 1 may further include a first porous electrode 11b electrically connected to the first current collector 11a, and a second porous electrode 12b electrically connected to the second current collector 12a. A gap g1 between the anion exchange membrane 11c and the first porous electrode 11b may be smaller than a gap g2 between the cation exchange membrane 12c and the second porous electrode 12b.

The water treatment apparatus 1 may further include a porous electrode 12b electrically connected to the second current collector 12a. A thickness d2 of the gap g2 between the cation exchange membrane 12c and the porous electrode 12b may be 10µm~500µm.

Applying the negative voltage to the second current collector 12a may include applying a positive voltage to the first current collector 11a, and applying a positive voltage to the second current collector 12a may include applying a negative voltage to the first current collector 11a.

The second current collector 12a may be made of a material that may allow an aqueous solution of 1000 ppm of NaCl to reach less than or equal to pH 4 at a current density of 25 mA/cm2 within less than or equal to 7 minutes.

The water treatment apparatus 1 may further include: a first flow path 21 configured to allow external water to flow in; a second flow path 22 configured to allow water to flow from the first flow path 21 to the second channel 12; a third flow path 23 configured to allow water to flow from the first flow path 21 to the third channel 13; and at least one valve 30 configured to allow water to flow from the first flow path 21 to one of the second flow path 22 or the third flow path 23.

The controller 70 may be configured to: in the deionization operation, control the at least one valve 30 to allow water to flow from the first flow path 21 to the third flow path 23; and in the descaling operation, control the at least one valve 30 to allow water to flow from the first flow path 21 to the second flow path 22.

The water treatment apparatus 1 may further include a pump 16 configured to pump the external water to the first flow path 21. The controller 70 may be configured to, in the regeneration operation, control a maximum operating revolution per minute (RPM) of the pump 16 to a first RPM, and in the descaling operation, control the maximum operating RPM of the pump to a second RPM greater than the first RPM.

The water treatment apparatus 1 may further include a circulation flow path 25 configured to allow water discharged from the second channel 12 to flow into the third channel 13, and a circulation valve (30; 30c) configured to open and close the circulation flow path 25.

The controller 70 may be configured to, in the deionization operation and the regeneration operation, control the circulation valve (30; 30c) to close the circulation flow path 25, and in the descaling operation, control the circulation valve (30; 30c) to open the circulation flow path 25.

The water treatment apparatus 1 may further include: a first discharge flow path 26 configured to allow water discharged from the third channel 13 to flow; a second discharge flow path 27 configured to allow the water discharged from the third channel 13 to flow; and at least one valve (30; 30c) configured to allow the water discharged from the third channel 13 to one of the first discharge flow path 26 or the second discharge flow path 27. The controller 70 may be configured to, in the deionization operation, control the at least one valve (30; 30c) to allow water to flow from the third channel 13 to the first discharge flow path 26, and in the regeneration operation and the descaling operation, control the at least one valve (30; 30c) to allow water to flow from the third channel 13 to the second discharge flow path 27.

The water treatment apparatus 1 may further include at least one sensor 50 configured to detect a water quality of water discharged from the third channel 13. The controller 70 may be configured to perform the regeneration operation based on the deionization operation having been performed for a predetermined period of time, and perform the descaling operation based on a descaling condition being satisfied by the at least one sensor 50.

According to embodiments, a method for controlling a water treatment apparatus 1 may include, in a deionization operation, causing cations contained in water in a third channel 13 to move to a second channel 12 by applying a negative voltage to a second current collector 12a; in a regeneration operation, causing cations in the second channel 12 to move to the third channel 13 by applying a first positive voltage to the second current collector 12a; and in a descaling operation, causing water in the second channel 12 to be electrolyzed by applying a second positive voltage greater than the first positive voltage in magnitude to the second current collector 12a.

The method for controlling the water treatment apparatus 1 may further include, in the deionization operation, controlling at least one valve 30 to allow water to flow from a first flow path 21 to a third flow path 23; and in the descaling operation, controlling the at least one valve 30 to allow water to flow from the first flow path 21 to a second flow path 22.

The method for controlling the water treatment apparatus 1 may further include, in the regeneration operation, controlling a maximum operating RPM of a pump 16 to a first RPM, and in the descaling operation, controlling the maximum operating RPM of the pump 16 to a second RPM greater than the first RPM.

The method for controlling the water treatment apparatus 1 may further include, in the deionization operation and the regeneration operation, controlling a circulation valve (30; 30c) to close a circulation flow path 25, and in the descaling operation, controlling the circulation valve (30; 30c) to open the circulation flow path 25.

The method for controlling the water treatment apparatus 1 may further include, in the deionization operation, controlling the at least one valve 30 to allow water to flow from the third channel 13 to the first discharge flow path 26, and in the regeneration operation and the descaling operation, controlling the at least one valve 30 to allow water to flow from the third channel 13 to the second discharge flow path 27.

The method for controlling the water treatment apparatus 1 may further include, performing the regeneration operation based on the deionization operation having been performed for a predetermined period of time, and performing the descaling operation based on a descaling condition being satisfied by the at least one sensor 50 configured to detect a water quality of water discharged from the third channel 13.

The embodiments may be implemented in the form of a recording medium that stores instructions executable by a computer. The instructions may be stored in the form of program codes, and when executed by a processor, the instructions may generate a program module to perform operations of the disclosed embodiments. The recording medium may be implemented as a computer-readable recording medium.

The computer-readable recording medium may be provided in the form of a non-transitory storage medium. The term non-transitory storage medium may indicate a tangible device without including a signal (e.g., electromagnetic waves) and may not distinguish between storing data in the storage medium semi-permanently and temporarily. For example, the non-transitory storage medium may include a buffer that temporarily stores data.

The method according to the various embodiments may be provided in a computer program product. The computer program product may be a commercial product that may be traded between a seller and a buyer. The computer program product may be distributed in the form of a storage medium (e.g., compact disc read only memory (CD-ROM)), through an application store (e.g., play store^{™}), directly between two user devices (e.g., smartphones), or online (e.g., downloaded or uploaded). In the case of online distribution, at least part of the computer program product (e.g., a downloadable app) may be at least temporarily stored or arbitrarily generated in a storage medium that may be readable to a device, such as a server of the manufacturer, a server of the application store, or a relay server.

At least one of the components, elements, modules or units (collectively "components" in this paragraph) represented by a block in the drawings, may be embodied as various numbers of hardware, software and/or firmware structures that execute respective functions described above, according to an exemplary embodiment. For example, at least one of these components may use a direct circuit structure, such as a memory, a processor, a logic circuit, a look-up table, etc. that may execute the respective functions through controls of one or more microprocessors or other control apparatuses. Also, at least one of these components may be specifically embodied by a module, a program, or a part of code, which contains one or more executable instructions for performing specified logic functions, and executed by one or more microprocessors or other control apparatuses. Further, at least one of these components may include or may be implemented by a processor such as a central processing unit (CPU) that performs the respective functions, a microprocessor, or the like. Two or more of these components may be combined into one single component which performs all operations or functions of the combined two or more components. Also, at least part of functions of at least one of these components may be performed by another of these components. Further, although a bus is not illustrated in the above block diagrams, communication between the components may be performed through the bus. Functional aspects of the above exemplary embodiments may be implemented in algorithms that execute on one or more processors. Furthermore, the components represented by a block or processing steps may employ any number of related art techniques for electronics configuration, signal processing and/or control, data processing and the like.

Although disclosure has been shown and described in relation to specific embodiments, it would be appreciated by those skilled in the art that changes and modifications may be made in these embodiments without departing from the principles and scope of embodiments, the scope of which is defined in the claims and their equivalents.

## Claims

1. A water treatment apparatus, comprising:
a first channel comprising a first current collector and an anion exchange membrane;
a second channel comprising a second current collector and a cation exchange membrane;
a third channel comprising the anion exchange membrane and the cation exchange membrane; and
at least one processor configured to:
during a deionization operation, apply a negative voltage to the second current collector to move cations contained in water in the third channel to the second channel,
during a regeneration operation, apply a first positive voltage to the second current collector to move cations in the second channel to the third channel, and
during a descaling operation, apply a second positive voltage greater than the first positive voltage to the second current collector to electrolyze water in the second channel.

2. The water treatment apparatus of claim 1, wherein the second current collector comprises at least one of a transition metal, a transition metal oxide, a transition metal alloy, aluminum, an aluminum oxide, graphene, a dimensionally stable anode (DSA), and a boron doped diamond (BDD) electrode.

3. The water treatment apparatus of claim 1, further comprising:
a porous electrode electrically connected to the second current collector; and
a spacer between the porous electrode and the cation exchange membrane.

4. The water treatment apparatus of claim 1, further comprising:
a first porous electrode electrically connected to the first current collector; and
a second porous electrode electrically connected to the second current collector,
wherein a gap between the anion exchange membrane and the first porous electrode is smaller than a gap between the cation exchange membrane and the second porous electrode.

5. The water treatment apparatus of claim 1, further comprising:
a porous electrode electrically connected to the second current collector,
wherein a thickness of a gap between the cation exchange membrane and the porous electrode ranges from 10µm to 500µm.

6. The water treatment apparatus of claim 1, wherein applying the negative voltage to the second current collector comprises applying a positive voltage to the first current collector, and
wherein applying a positive voltage to the second current collector comprises applying a negative voltage to the first current collector.

7. The water treatment apparatus of claim 1, wherein the second current collector comprises a material configured to allow an aqueous solution of 1000 ppm of NaCl to reach less than or equal to pH 4 at a current density of 25 mA/cm2 within less than or equal to 7 minutes.

8. The water treatment apparatus of claim 1, further comprising:
a first flow path configured to allow external water to flow;
a second flow path configured to allow water to flow from the first flow path to the second channel;
a third flow path configured to allow water to flow from the first flow path to the third channel; and
at least one valve configured to allow water to flow from the first flow path to one of the second flow path and the third flow path.

9. The water treatment apparatus of claim 8, wherein the at least one processor is further configured to:
during the deionization operation, control the at least one valve to allow water to flow from the first flow path to the third flow path; and
during the descaling operation, control the at least one valve to allow water to flow from the first flow path to the second flow path.

10. The water treatment apparatus of claim 8, further comprising:
a pump configured to pump the external water to the first flow path,
wherein the at least one processor is further configured to:
during the regeneration operation, control a maximum operating revolution per minute (RPM) of the pump to a first RPM, and
during the descaling operation, control the maximum operating RPM of the pump to a second RPM greater than the first RPM.

11. The water treatment apparatus of claim 1, further comprising:
a circulation flow path configured to allow water discharged from the second channel to flow into the third channel; and
a circulation valve configured to open and close the circulation flow path.

12. The water treatment apparatus of claim 11, wherein the at least one processor is further configured to:
during the deionization operation and the regeneration operation, control the circulation valve to close the circulation flow path, and
during the descaling operation, control the circulation valve to open the circulation flow path.

13. The water treatment apparatus of claim 1, further comprising:
a first discharge flow path configured to allow water discharged from the third channel to flow;
a second discharge flow path configured to allow the water discharged from the third channel to flow; and
at least one valve configured to allow the water discharged from the third channel to one of the first discharge flow path or the second discharge flow path,
wherein the at least one processor is further configured to:
during the deionization operation, control the at least one valve to allow water to flow from the third channel to the first discharge flow path, and
during the regeneration operation and the descaling operation, control the at least one valve to allow water to flow from the third channel to the second discharge flow path.

14. The water treatment apparatus of claim 1, further comprising:
at least one sensor configured to detect a water quality of water discharged from the third channel,
wherein the at least one processor is further configured to:
perform the regeneration operation based on the deionization operation having been performed for a predetermined period of time, and
perform the descaling operation based on a descaling condition being satisfied by the at least one sensor.

15. A method for controlling a water treatment apparatus comprising a first channel that comprises a first current collector and an anion exchange membrane, a second channel that comprises a second current collector and a cation exchange membrane, and a third channel that comprises the anion exchange membrane and the cation exchange membrane, the method comprising:
during a deionization operation, applying a negative voltage to the second current collector to move cations contained in water in the third channel to the second channel;
during a regeneration operation, applying a first positive voltage to the second current collector to move cations in the second channel to the third channel; and
during a descaling operation, applying a second positive voltage greater than the first positive voltage to the second current collector to electrolyze water in the second channel.
